# EUROPEAN PATENT APPLICATION

(11) **EP 4 815 522 A1**
(43) Date of publication of application: **30.09.2026**
(21) Application number: 23959161.3
(22) Date of filing: 22.11.2023
(51) Int. Cl.: H04W 4/70

(54) **SIDELINK COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN)
(74) Representative: Taor, Simon Edward William
(86) International application number: PCT/CN2023/133333
(87) International publication number: WO 2025/107187

(57) **Abstract**

This disclosure relates to a method for sidelink (SL) communication. The method includes the following. A first terminal shares channel occupancy time (COT) with a second terminal when a first condition is satisfied. According to embodiments of the disclosure, the likelihood of obtaining COT by a terminal can be increased, and energy consumption of the terminal can be reduced.

## Description

### TECHNICAL FIELD

This disclosure relates to the field of communication, and more particularly, to a method for sidelink (SL) communication and a device.

### BACKGROUND

During sidelink (SL) transmission over unlicensed spectrum (SL-U), SL transmission is required to satisfy specific requirements, for example, requirements on the minimum occupied channel bandwidth (OCB) and the maximum power spectral density (PSD). On the unlicensed spectrum, a terminal may access a channel by Type 1 listen before talk (LBT), Type 2A LBT, Type 2B LBT, or Type 2C LBT. After succeeding in Type 1 LBT, a communication device may initiate channel occupancy time (COT) on a carrier of the unlicensed spectrum, and the communication device may perform transmission in the COT or share the COT with other communication devices. For SL communication over the unlicensed spectrum, in the case where the terminal has no available COT, the terminal needs to access a channel by using Type 1 channel access.

### SUMMARY

A method for sidelink (SL) communication and a device are provided in embodiments of the disclosure, which can reduce energy consumed by a terminal when performing Type 1 channel access.

A method for SL communication is provided in embodiments of the disclosure. The method includes the following. A first terminal shares channel occupancy time (COT) with a second terminal when a first condition is satisfied.

A method for SL communication is provided in embodiments of the disclosure. The method includes the following. A second terminal transmits first information to a first terminal, where the first information is used for requesting the first terminal to provide COT.

A first terminal is provided in embodiments of the disclosure. The first terminal includes a processing unit. The processing unit is configured to share COT with a second terminal when a first condition is satisfied.

A second terminal is provided in embodiments of the disclosure. The second terminal includes a transmitting unit. The transmitting unit is configured to transmit first information to a first terminal, where the first information is used for requesting the first terminal to provide COT.

A first terminal is provided in embodiments of the disclosure. The first terminal includes a transceiver, a processor, and a memory. The memory is configured to store a computer program, the transceiver is configured to communicate with other devices, and the processor is configured to invoke and execute the computer program stored in the memory, to cause the first terminal to perform the above method for SL communication.

A second terminal is provided in embodiments of the disclosure. The second terminal includes a transceiver, a processor, and a memory. The memory is configured to store a computer program, the transceiver is configured to communicate with other devices, and the processor is configured to invoke and execute the computer program stored in the memory, to cause the second terminal to perform the above method for SL communication.

A chip is provided in embodiments of the disclosure. The chip is configured to implement the above method for SL communication.

Specifically, the chip includes a processor. The processor is configured to invoke and execute a computer program stored in a memory, to cause a device equipped with the chip to perform the above method for SL communication.

A computer-readable storage medium is provided in embodiments of the disclosure. The computer-readable storage medium is configured to store a computer program which, when executed by a device, causes the device to perform the above method for SL communication.

A computer program product is provided in embodiments of the disclosure. The computer program product includes computer program instructions which cause a computer to perform the above method for SL communication.

A computer program is provided in embodiments of the disclosure. The computer program, when executed by a computer, causes the computer to perform the above method for SL communication.

According to embodiments of the disclosure, the likelihood of obtaining COT by the terminal can be increased, and energy consumption of the terminal can be reduced.

### BRIEF DESCRIPTION OF THE DRAWINGS

FIG. 1 is a schematic diagram illustrating a portion of symbols in a slot used for sidelink (SL) transmission.

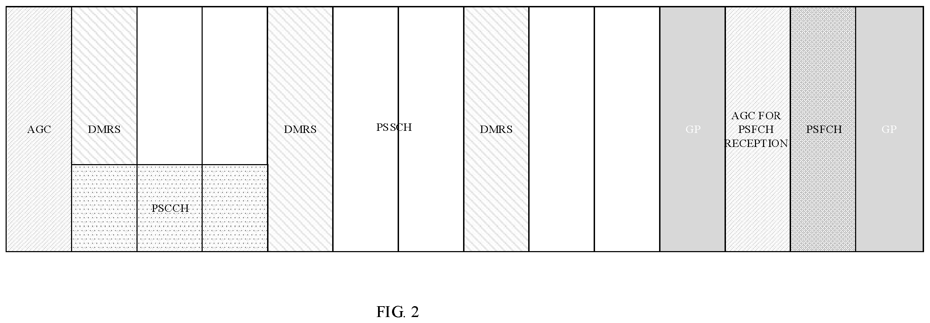

FIG. 2 is a schematic diagram illustrating a slot structure for a physical sidelink control channel (PSCCH) and a physical sidelink shared channel (PSSCH).
FIG. 3 is a schematic diagram illustrating time-domain positions of four demodulation reference symbols (DMRSs) in a case of 13 PSSCH symbols.
FIG. 4 is a schematic diagram illustrating frequency-domain positions of PSSCH DMRSs.
FIG. 5 is a schematic diagram illustrating a resource pool for PSCCH and PSSCH in new radio vehicle-to-everything (NR-V2X).
FIG. 6 is a schematic diagram illustrating interlaced resource blocks (IRBs).
FIG. 7 is a schematic diagram illustrating an IRB-based frame structure.
FIG. 8 is a schematic diagram illustrating resource block (RB) sets.
FIG. 9 is a schematic flow chart of a method for SL communication according to an embodiment of the disclosure.
FIG. 10 is a schematic flow chart of a method for SL communication according to another embodiment of the disclosure.
FIG. 11 is a schematic flow chart of a method for SL communication according to another embodiment of the disclosure.
FIG. 12 is a schematic flow chart of a method for SL communication according to another embodiment of the disclosure.
FIG. 13 is a schematic flow chart of a method for SL communication according to another embodiment of the disclosure.
FIG. 14 is a schematic flow chart of channel occupancy time (COT) sharing.
FIGs. 15 and 16 are schematic diagrams illustrating a medium access control (MAC) control element (CE) for carrying a COT request.
FIG. 17 is a schematic block diagram of a first terminal according to an embodiment of the disclosure.
FIG. 18 is a schematic flow chart of a first terminal according to another embodiment of the disclosure.
FIG. 19 is a schematic block diagram of a second terminal according to an embodiment of the disclosure.
FIG. 20 is a schematic block diagram of a second terminal according to another embodiment of the disclosure.
FIG. 21 is a schematic block diagram of a communication device according to embodiments of the disclosure.
FIG. 22 is a schematic block diagram of a chip according to embodiments of the disclosure.
FIG. 23 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (Wi-Fi), a 5th-generation (5G) communication system, or other communication systems, etc.

Generally, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle-to-vehicle (V2V) communication, or vehicle-to-everything (V2X) communication, etc. Embodiments of the disclosure can also be applied to these communication systems.

In an embodiment, the communication system in embodiments of the disclosure may be applied to a carrier aggregation (CA) scenario, or may be applied to a dual connectivity (DC) scenario, or may be applied to a standalone (SA) network deployment scenario.

In an embodiment, the communication system in embodiments of the disclosure is applicable to an unlicensed spectrum, and an unlicensed spectrum may be regarded as a shared spectrum. Alternatively, the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, and the like.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device can serve a cell, and the terminal device can communicate with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

It may be understood that, the terms "system" and "network" herein are usually used interchangeably throughout this disclosure. The term "and/or" herein only describes an association relationship between associated objects, which means that there may be three relationships. For example, *A* and/or *B* may mean *A* alone, both *A* and *B* exist, and *B* alone. In addition, the character "/" herein generally indicates that the associated objects are in an "or" relationship.

It may be understood that, "indication" referred to in embodiments of the disclosure may be a direct indication, may be an indirect indication, or may mean that there is an association relationship. For example, *A* indicates *B* may mean that *A* directly indicates *B*, for instance, *B* can be obtained according to *A*; may mean that *A* indirectly indicates *B*, for instance, *A* indicates *C*, and *B* can be obtained according to *C*; or may mean that that there is an association relationship between *A* and *B*.

In the elaboration of embodiments of the disclosure, the term "correspondence" may mean that there is a direct or indirect correspondence between the two, may mean that there is an association relationship between the two, or may mean a relationship of indicating and being indicated or configuring and being configured, etc.

To facilitate understanding of the technical solutions of embodiments of the disclosure, the related art in embodiments of the disclosure will be described below. The related art below, as an optional scheme, can be arbitrarily combined with the technical solutions of embodiments of the disclosure, which shall all belong to the protection scope of embodiments of the disclosure.

### I. Slot structure in NR-V2X

In NR-V2X, a physical sidelink shared channel (PSSCH) and a physical sidelink control channel (PSCCH) associated with the PSSCH are transmitted in the same slot, where the PSCCH occupies two or three time-domain symbols. Time-domain resource assignment (also referred to as time resource assignment) in NR-V2X is performed at a granularity of a slot. The start position and length of time-domain symbols for sidelink (SL) transmission in a slot are configured through parameters start symbol position *sl-startSLsymbols* and the number (quantity) of symbols *sl-lengthSLsymbols*, respectively. The last symbol in these symbols is used as a guard period (GP), and only the remaining time-domain symbols can be used for the PSSCH and the PSCCH. However, in the case where a physical sidelink feedback channel (PSFCH) transmission resource is configured in a slot, the PSSCH and the PSCCH cannot occupy a time-domain symbol(s) for PSFCH transmission, as well as automatic gain control (AGC) and GP symbols preceding the symbol(s) for the PSFCH transmission.

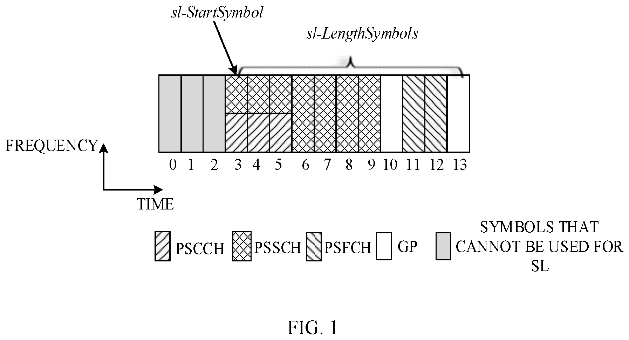

As illustrated in FIG. 1, a network configures *sl-StartSymbol*=3 and *sl-LengthSymbols*=11, that is, 11 time-domain symbols starting from a symbol with index 3 in a slot are available for SL transmission. There are PSFCH transmission resources in the slot, and the PSFCH occupies symbols 11 and 12, where symbol 11 serves as an AGC symbol for the PSFCH, and symbols 10 and 13 are used as GPs. Time-domain symbols available for PSSCH transmission are symbols 3 to 9. A PSCCH occupies three time-domain symbols, namely symbols 3, 4, and 5. Symbol 3 generally serves as an AGC symbol.

In addition to the PSCCH and PSSCH, a PSFCH may also exist in an SL slot in NR-V2X. In a slot, the first orthogonal frequency division multiplexing (OFDM) symbol is fixed for AGC. In the AGC symbol, a UE duplicates information transmitted in the second symbol. At the end of the slot, a symbol is reserved for transmit-receive switching, which is used for the UE to switch from a transmit (or receive) state to a receive (or transmit) state. Among the remaining OFDM symbols, the PSCCH can occupy two or three OFDM symbols starting from the second SL symbol. In the frequency domain, the number of physical resource blocks (PRBs) occupied by the PSCCH is within one subband range of the PSSCH. When the number of PRBs occupied by the PSCCH is less than the size of one subchannel of the PSSCH, or frequency-domain resources of the PSSCH include multiple subchannels, the PSCCH can be frequency-division multiplexed with the PSSCH in an OFDM symbol where the PSCCH is located.

In NR-V2X, the design of a PSSCH demodulation reference symbol (DMRS) draws inspiration from the design of an NR UE-universal mobile telecommunication system terrestrial radio access network (UE-UTRAN, Uu) interface, in which multiple time-domain PSSCH

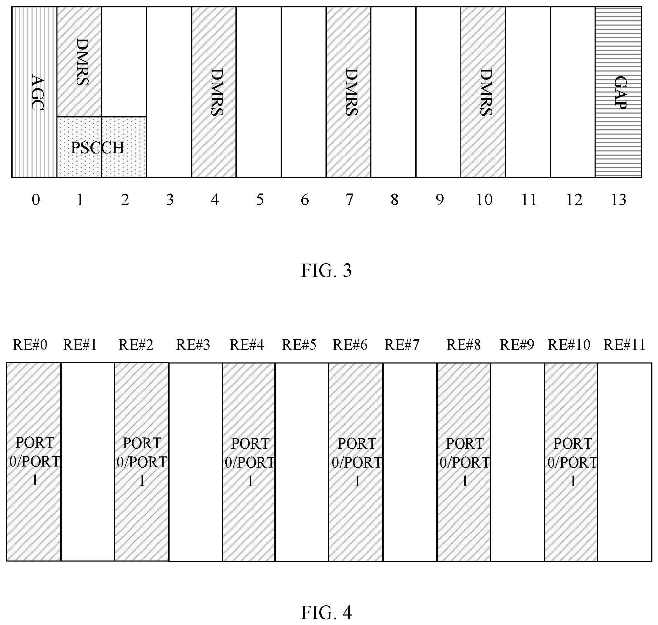

DMRS patterns are used. In a resource pool, the number of available DMRS patterns is related to the number of PSSCH symbols in the resource pool. For the specific number of PSSCH symbols (including the first AGC symbol) and number of PSCCH symbols, available DMRS patterns and positions of each DMRS in the patterns are illustrated in Table 1. FIG. 3 provides a schematic diagram illustrating time-domain positions of four DMRSs when the number of PSSCH symbols is 13.

**Table 1: numbers and positions of DMRSs for different numbers of PSSCH and PSCCH symbols**

| Number of PSSCH symbols (including the first AGC symbol) | Positions of DMRSs (relative to a position of the first AGC symbol) | | | | | |
|---|---|---|---|---|---|---|
| | Number of PSCCH symbols=2 | | | Number of PSCCH symbols=3 | | |
| | Number of DMRSs | | | Number of DMRSs | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

In the case where multiple time-domain DMRS patterns are configured for the resource pool, a specific time-domain DMRS pattern to-be-used is selected by a transmitting UE and indicated in first-stage SL control information (SCI). This design allows a UE with high mobility to select a high-density DMRS pattern, thereby ensuring the accuracy of channel estimation. For a UE with low mobility, a low-density DMRS pattern can be used, thereby improving spectral efficiency.

In the case where multiple time-domain DMRS patterns are configured for the resource pool, a specific time-domain DMRS pattern to-be-used is selected by a transmitting UE and indicated in first-stage SCI. This design allows a UE with high mobility to select a high-density DMRS pattern, thereby ensuring the accuracy of channel estimation. For a UE with low mobility, a low-density DMRS pattern can be used, thereby improving spectral efficiency.

A method for generating a PSSCH DMRS sequence is almost identical to a method for generating a PSCCH DMRS sequence. The difference lies in that an initialization formula *c*ᵢₙᵢₜ for a pseudo-random sequence *c*(*m*) is generated according to a cyclic redundancy check (CRC) for a PSCCH scheduling the PSSCH.

A physical downlink shared channel (PDSCH) and a physical uplink shared channel (PUSCH) in NR supports two types of frequency-domain DMRS patterns, namely DMRS frequency-domain Type 1 and DMRS frequency-domain Type 2. For each frequency-domain type, there are two different types: single-symbol DMRS and double-symbol DMRS. The single-symbol DMRS frequency-domain Type 1 supports four DMRS ports, and the single-symbol DMRS frequency-domain Type 2 can support six DMRS ports. The number of supported ports doubles in the case of double-symbol DMRS. However, in NR-V2X, since the PSSCH only needs to support up to two DMRS ports, only single-symbol DMRS frequency-domain Type 1 is supported, as illustrated in FIG. 4.

### II. Determination of frequency-domain resources in NR-V2X

Similar to LTE-V2X, frequency-domain resources in an NR-V2X resource pool are also consecutive, and a granularity of frequency-domain resource assignment (also referred to as frequency resource assignment) is also a subchannel. The number of PRBs in a subchannel is {10, 12, 15, 20, 50, 75, 100}, where the minimum subchannel size is 10 PRBs, which is much larger than the minimum subchannel size of 4 PRBs in LTE-V2X. This is mainly because a frequency-domain resource for a PSCCH in NR-V2X is located within the first subchannel of a PSSCH associated with the PSCCH, and the frequency-domain resource for the PSCCH has a size less than or equal to the size of a subchannel of the PSSCH, while a time-domain resource for the PSCCH occupies two or three OFDM symbols. In the case where the subchannel size is configured to be small, there will be fewer available resources for the PSCCH, thereby increasing code rate and degrading PSCCH detection performance. In NR-V2X, the size of the subchannel of the PSSCH is configured independently from the size of the frequency-domain resource for the PSCCH, but it is necessary to ensure that the size of the frequency-domain resource for the PSCCH is less than or equal to the size of the subchannel of the PSSCH. The following configuration parameters in NR-V2X resource pool configuration information are used for determining frequency-domain resources in a resource pool for PSCCH and PSSCH. Examples are as follows:
(1) Subchannel size (*sl-Subchannel Size*): indicating the number of consecutive PRBs in a subchannel in a resource pool, with a value range of {10, 12, 15, 20, 50, 75, 100} PRBs;
(2) Number of subchannels (*sl-Num Subchannel*): indicating the number of subchannels in a resource pool;
(3) Index of start resource block (RB) of subchannel (*sl-Start RB-Subchannel*): indicating an index of a start PRB of the first subchannel in a resource pool;
(4) Number of PRBs (*sl-RB-Number*): indicating the number of consecutive PRBs in a resource pool; and
(5) PSCCH frequency-domain resource indicator (*sl-FreqResource PSCCH*): indicating the size of the frequency-domain resource for the PSCCH, with a value range of {10, 12, 15, 20, 25} PRBs.

In the case where a UE determines a resource pool for PSSCH transmission or PSSCH reception, frequency-domain resources in the resource pool are *sl-Num Subchannel* consecutive subchannels starting from a PRB indicated by *sl-Start RB-Subchannel*. When the number of PRBs in the *sl-Num Subchannel* consecutive subchannels is less than the number of PRBs indicated by *sl-RB-Number*, the remaining PRBs cannot be used for PSSCH transmission or PSSCH reception.

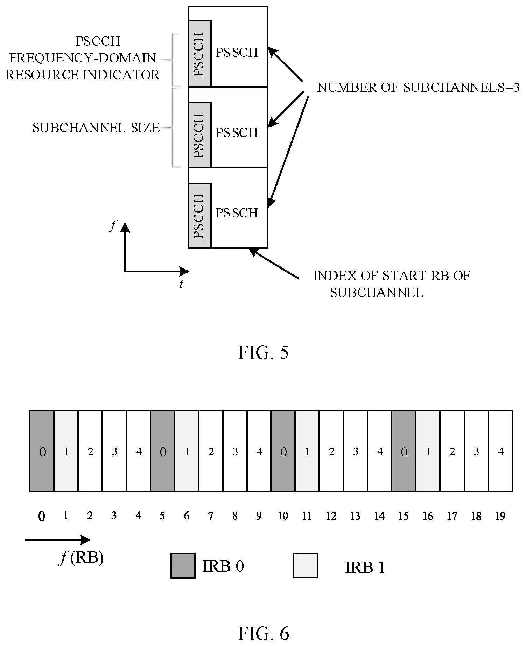

In NR-V2X, a frequency-domain start position of the PSCCH is aligned with a frequency-domain start position of the first subchannel of the PSSCH associated with the PSCCH. Therefore, a start position of each subchannel of the PSSCH is a possible frequency-domain start position of the PSCCH. A frequency-domain range of the resource pool for PSCCH and PSSCH can be determined according to the above parameters, as illustrated in FIG. 5.

In NR-V2X, the PSCCH is used for carrying SCI related to resource sensing, for example:
(1) a priority of scheduled transmission;
(2) frequency-domain resource assignment, indicating the number of frequency-domain resources for a PSSCH scheduled by the PSCCH in a current slot, as well as the number and the start position of frequency-domain resources of up to two reserved retransmission resources;
(3) time-domain resource assignment, indicating a time-domain position(s) of up to two retransmission resources;
(4) a reference signal pattern for the PSSCH;
(5) a second-stage SCI format;
(6) a code rate offset for second-stage SCI;
(7) the number of PSSCH DMRS ports;
(8) a modulation and coding scheme (MCS);
(9) an MCS table indicator;
(10) the number of PSFCH symbols;
(11) a resource reservation period, for reserving resources for transmission of another transport block (TB) in a next period, where this information bit field does not exist in the case where inter-TB resource reservation is not activated in a resource pool configuration;
(12) reserved bits: 2 to 4 bits, and the specific number of bits is configured or pre-configured by a network.

Since the PSCCH is always transmitted in the same slot as the scheduled PSSCH, and a start position of a PRB occupied by the PSCCH is a start position of the first subchannel of the scheduled PSSCH, a time-frequency start position of the scheduled PSSCH is not explicitly indicated by SCI format 1-A.

### III. SL transmission over unlicensed spectrum (SL-U)

During SL-U, SL transmission is required to satisfy requirements on an occupied channel bandwidth (OCB) and power spectral density (PSD). For requirements on the OCB, when a UE uses a channel for data transmission, the occupied channel bandwidth is not less than 80% of bandwidth of the channel. For requirements on the maximum PSD, the transmit power of the UE per 1 megahertz (MHz) cannot exceed 10 decibel-milliwatts (dBm). To satisfy regulatory requirements on the OCB and PSD, an interlaced resource block (IRB) structure is required for SL-U. An IRB contains *N* RBs discrete in the frequency domain, and a total of *M* IRBs are included in a frequency band range. RBs in the *m*-th IRB are {*m*, *M*+*m*, *2M*+*m*, *3M+m*, ...}.

As illustrated in FIG. 6, a system bandwidth consists of 20 RBs, including 5 IRBs (i.e., *M*=5), where each IRB contains 4 RBs (i.e., *N*=4), and frequency-domain spacings between two adjacent RBs belonging to the same IRB are the same, i.e., 5 RBs. Numbers in boxes in the figure represent IRB indexes.

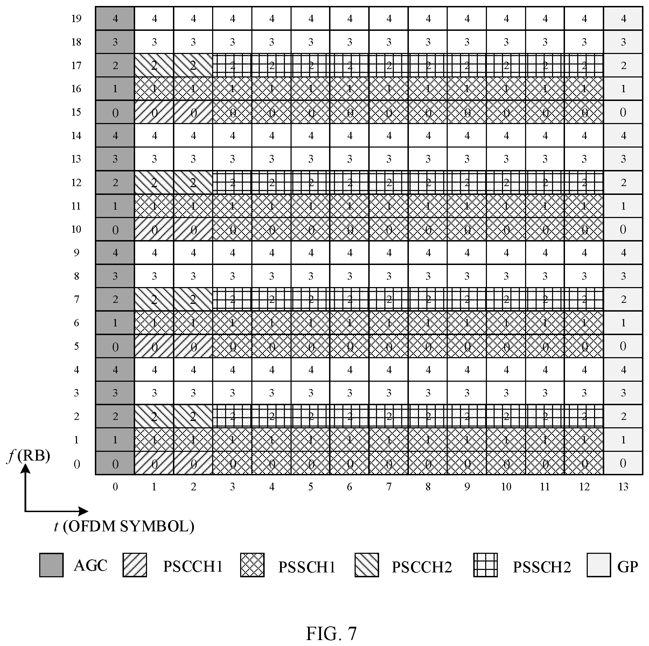

In an SL-U system, in the case where a granularity of IRB-based resource assignment is used, channels such as a PSCCH and a PSSCH in the SL-U system may all be based on the IRB structure. In this case, a frame structure of the SL-U system is as illustrated in FIG. 7, where numbers in boxes in the figure represent IRB indexes. FIG. 7 is a schematic diagram illustrating a frame structure in which only PSCCH and PSSCH symbols are included and no PSFCH symbols are included in a slot. A bandwidth illustrated in the figure consists of 20 RBs, with 5 IRB resources configured, i.e., *M*=5, where each IRB resource contains 4 RBs. The numbers in the boxes represent the IRB indexes. In FIG. 7, a system configures the PSCCH to occupy 1 IRB resource and 2 OFDM symbols in the time domain. For the PSSCH, at a granularity of an IRB, the first symbol in the slot is an AGC symbol, and the last symbol in the slot is a GP symbol. In the figure, PSSCH1 occupies IRB#0 and IRB#1, and PSCCH1 corresponding to PSSCH1 occupies IRB#0. PSSCH2 occupies IRB#2, and PSCCH2 corresponding to PSSCH2 also occupies IRB#2. It may be noted that, for simplicity, resources occupied by second-stage SCI as well as resources occupied by PSCCH DMRS and PSSCH DMRS are not illustrated in the figure.

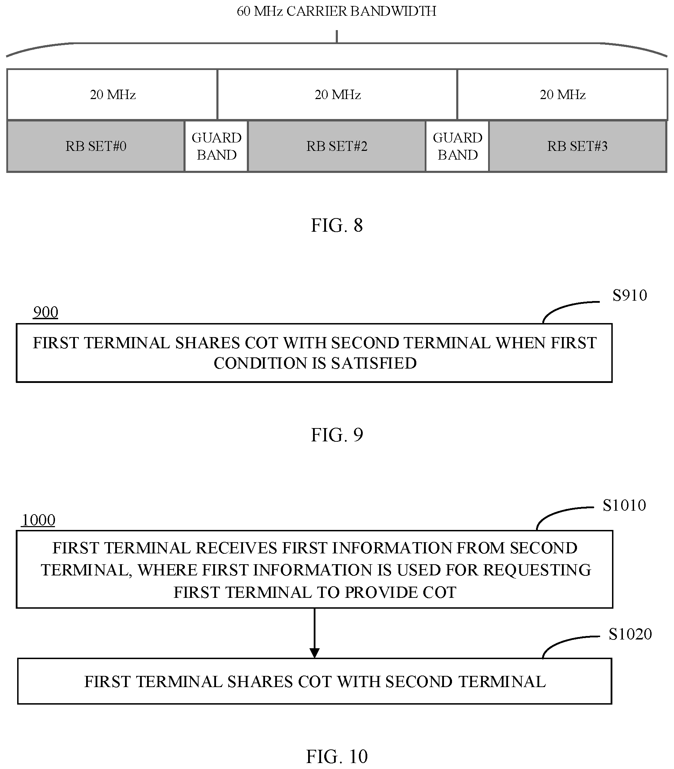

On the unlicensed spectrum, the UE accesses a channel by listen before talk (LBT). LBT has a granularity of 20 MHz in the frequency domain, with every 20 MHz referred to as an RB set. Multiple RB sets may be included in a carrier, and there are GPs between RB sets, as illustrated in FIG. 8.

### IV. Channel access on unlicensed spectrum

On the unlicensed spectrum, a UE may access a channel by Type 1 LBT, Type 2A LBT, Type 2B LBT, or Type 2C LBT. Specific examples are as follows.

### 1. Type 1 channel access

Taking a base station as an example, channel access parameters corresponding to a channel access priority class (CAPC) *p* at the base station side are illustrated in Table 2. In Table *2, mₚ* refers to the number of back-off slots corresponding to the CAPC *p, CWₚ* refers to the size of a contention window (CW) corresponding to the CAPC *p, CW_{min,p}* refers to the minimum value of *CWₚ* corresponding to the CAPC *p, CW_{max,p}* refers to the maximum value of *CWₚ* corresponding to the CAPC *p, and T_{mcot,p}* refers to the maximum channel occupancy time (COT) length corresponding to the CAPC *p.*

The base station may select a corresponding CAPC *p* according to a priority of a service to-be-transmitted, and obtain COT on a carrier of the unlicensed spectrum by using Type 1 channel access according to the channel access parameters corresponding to the CAPC *p* in Table 2. In the obtained COT, the base station may perform continuous transmission or discontinuous transmission. Specifically, in terms of initiating, by the base station, the COT by performing Type 1 LBT, the following steps may be included.
(1) Set a counter *N=Nᵢₙᵢₜ,* where *Nᵢₙᵢₜ* is a random number uniformly distributed between 0 and *CWₚ,* and perform step (4).
(2) When *N*>0, decrement, by the base station, the counter by 1, that is, *N=N*-1*.*
(3) Perform detection on a sensing slot with a length of *Tₛₗ* (where *Tₛₗ* represents an LBT sensing slot, with a length of 9 µs) for the channel, and when the sensing slot is idle, perform step (4); otherwise, perform step (5).
(4) When *N*=0, terminate channel access; otherwise, perform step (2).
(5) Perform detection on a sensing slot with a time length of *T_{d}* (where *T_{d}* =16*+mₚ**9 [µs]) for the channel, where a result of the sensing slot detection is either that at least one sensing slot is occupied or that all sensing slots are idle.
(6) When a result of channel sensing is that all sensing slots are idle within time *T_{d}*, perform step (4); otherwise, perform step (5).

**Table 2: channel access parameters corresponding to different CAPCs p**

| **CAPC (*p*)** | ***mₚ*** | ***CW_{min,p}*** | ***CW_{max,p}*** | ***T_{mcot,p}*** | **Allowed *CWₚ* sizes** |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 ms or 10 ms | {15,31,63} |
| 4 | 7 | 15 | 1023 | 8 ms or 10 ms | {15,31,63,127,255,511,1023} |

When channel access is terminated, the base station may use the channel for transmission. The maximum time length for which the base station may use the channel for transmission cannot exceed *T_{mcot,p}*.

Before the base station starts step (1) of the above Type 1 channel access, the base station needs to maintain and adjust *CWₚ*. Initially, *CWₚ* is set to the minimum value *CW_{min,p}*. During transmission, *CWₚ* may be adjusted within an allowable *CWₚ* value range according to acknowledgement (ACK) information or negative acknowledgement (NACK) information that is fed back by a terminal and received by the base station. In the case where *CWₚ* has been increased to the maximum value *CW_{max,p}*, and the maximum value *CW_{max,p}* has been maintained for a certain number of times, then *CWₚ* may be reset to the minimum value *CW_{min,p}*.

After succeeding in Type 1 LBT, a communication device may initiate COT on the carrier of the unlicensed spectrum, and the communication device may perform transmission in the COT or share the COT with other communication devices. In the case where the communication device does not immediately access the channel for data transmission, when the communication device needs to perform transmission afterwards, the communication device does not need to perform Type 1 LBT again and only needs to perform LBT once for a relatively short duration. For example, the terminal may only perform LBT for a duration of *Tₛₗ*+*T_{d}*. When a channel is idle in the sensing duration, the terminal may access the channel for transmission. Otherwise, the communication device needs to perform Type 1 LBT again before initiating COT.

### 2. Type 2A/2B/2C channel access

When a communication device performs transmission in COT, the communication device may access a channel by using Type 2A/2B LBT or Type 2C LBT. Specifically, during Type 2A channel access, a terminal may perform channel sensing for 25 µs before starting transmission, and perform transmission after channel sensing succeeds. During Type 2B channel access, the terminal may perform channel sensing for 16 µs before starting transmission, and perform transmission after channel sensing succeeds. A size of a gap between a start position of the transmission and an end position of the previous transmission is 16 µs. During Type 2C channel access, the terminal may directly perform transmission. A size of a gap between a start position of the transmission and an end position of the previous transmission is not greater than 16 µs, and a length of the transmission does not exceed 584 µs.

In an SL-U system, in the case where the terminal has no available COT, when the following conditions are satisfied, the terminal may access a channel by using a Type 2A mode, to transmit an SL synchronization signal and physical broadcast channel (PBCH) block (S-SSB). A transmission duration does not exceed 1 ms, and a duty cycle of S-SSB transmission does not exceed 1/20.

### V. First-stage SCI and second-stage SCI in NR SL

Design of two-stage SCI is supported in NR SL, where first-stage SCI for scheduling transmission of a PSSCH and/or a sidelink positioning reference signal (SL PRS) is referred to as SCI format 1-A, and examples of information contained in SCI format 1-A are as follows.
1. A priority of scheduled data: 3 bits, where 000 represents priority value 1, 001 represents priority value 2, and so on.
2. Frequency resource assignment: including a frequency resource indicator value (FRIV).

In the case where SCI can indicate a current transmission resource and a reserved resource for retransmission of a current TB, the FRIV occupies $\left⌈{log}_{2}\left(\frac{{N}_{subChannel}^{SL} \left({N}_{subChannel}^{SL}+1\right)}{2}\right)\right⌉$ bits, which indicates an initial subchannel index of the reserved resource and the number of subchannels in the current transmission resource and the reserved resource.

In the case where SCI can indicate a current transmission resource and two reserved resources for retransmission of a current TB, the FRIV occupies $\left⌈{log}_{2}\left(\frac{{N}_{subChannel}^{SL} \left({N}_{subChannel}^{SL}+1\right) \left({2 N}_{subChannel}^{SL}+1\right)}{6}\right)\right⌉$ bits, which indicates initial subchannel indexes of the two reserved resources and the number of subchannels in the current transmission resource and the two reserved resources.

3. Time resource assignment: including a time resource indicator value (TRIV).

In the case where a PSCCH can indicate a current transmission resource and a reserved resource for retransmission of a current TB, the TRIV occupies 5 bits, which indicates a slot interval between the reserved resource and the current transmission resource.

In the case where a PSCCH can indicate a current transmission resource and another two reserved resources for retransmission of a current TB, the TRIV occupies 9 bits, which indicates slot intervals between the two reserved resources and the current transmission resource. The slot intervals are represented as the number of slots belonging to a current resource pool.
4. A reference signal pattern for the PSSCH: $\left⌈{log}_{2} {N}_{pattern}\right⌉$ bits, where *N*ₚₐₜₜₑᵣₙ represents the number of DMRS patterns allowed in the current resource pool.
5. A second-stage SCI format: 2 bits. For example, 00 represents SCI format 2-A, 01 represents SCI format 2-B, 10 represents SCI format 2-C, and 11 represents a reserved state for a future version.
6. A code rate offset for second-stage SCI: 2 bits. For example, 00 represents the first code rate offset value configured by a radio resource control (RRC) layer, 01 represents the second code rate offset value configured by the RRC layer, 10 represents the third code rate offset value configured by the RRC layer, and 11 represents the fourth code rate offset value configured by the RRC layer.
7. The number of PSSCH DMRS ports: 1 bit. For example, 0 represents one port (port 1000), and 1 represents two ports (port 1000 and port 1001).
8. An MCS: 5 bits.
9. An MCS table indicator: 0 to 2 bits, depending on the number of allowed MCS tables configured in a resource pool.
10. The number of PSFCH symbols: 1 bit if a PSFCH period has 2 or 4 slots, otherwise 0 bit.
11. A resource reservation period: 4 bits, for reserving resources for transmission of another TB in a next period, where this information bit field does not exist in the case where inter-TB resource reservation is not activated in a resource pool configuration.
12. Reserved bits: 2 to 4 bits, and the specific number of bits is configured or pre-configured by a network.

In the case where the resource pool is configured with that whether a terminal supports receiving a resource conflict indicator is indicated via the least significant bit (LSB) of the reserve bits, the first reserved bit is set to "1" when the terminal supports such a function, otherwise the first reserved bit is set to "0". Values of other reserved bits are all set to "0".

Four types of second-stage SCI formats are defined in NR SL, namely, SCI format 2-A, SCI format 2-B, SCI format 2-C, and SCI format 2-D.

For example, SCI format 2-A has a total of 35 bits and contains the following information:
hybrid automatic repeat request (HARQ) process - 4 bits; new data indicator (NDI) - 1 bit;
redundancy version (RV) - 2 bits;
source identity (ID) - 8 bits; destination ID - 16 bits;
HARQ feedback activation/deactivation - 1 bit;
unicast/multicast/broadcast indicator - 2 bits; for example, 00 indicates broadcast, 01 indicates a multicast communication mode requiring ACK feedback or NACK feedback, 10 indicates unicast, and 11 indicates a multicast communication mode requiring only NACK feedback; and
channel state information (CSI) feedback request - 1 bit.

For example, SCI format 2-B has a total of 48 bits and only indicates multicast service transmission. Therefore, compared with SCI format 2-A, SCI format 2-B does not contain a unicast/multicast/broadcast indication field and a CSI feedback request field, but additionally contains the following two information fields: zone ID - 12 bits; and communication range requirement - 4 bits.

For example, SCI format 2-C is used for carrying an inter-UE coordination (IUC) request or IUC information. Information contained in SCI format 2-C includes two parts. A first part includes bit fields other than the "unicast/multicast/broadcast indication" field in SCI format 2-A. In the case where SCI format 2-C carries the IUC request, a second part includes the following additional information:
1. trigger signaling or reference resource set indicator - 1 bit;
2. priority - 3 bits;
3. the number of subchannels - $\left⌈{log}_{2} {N}_{Sbchannel}^{SL}\right⌉$ bits, where ${N}_{Subchannel}^{SL}$ represents the number of subchannels in a current resource pool;
4. resource reservation period: in the case where periodic resource reservation is allowed in the current resource pool, the resource reservation period occupies $\left⌈{log}_{2} {N}_{rsv _ period}\right⌉$ bits, where *N_{rsv_period}* represents the total number of resource reservation periods configured in the current resource pool; and in the case where periodic resource reservation is not allowed in the current resource pool, the resource reservation period occupies 0 bit;
5. resource selection window - $2 \left(10+\left⌈{log}_{2}\left(10⋅{2}^{μ}\right)\right⌉\right)$ bits, which indicates direct frame numbers (DFNs) and slot indexes corresponding to a start point and an end point of the resource selection window, and *µ* = 0,1,2,3 represents a subcarrier spacing index;
6. resource type: in the case where the current resource pool is configured to have the resource type determined by UE-B, the resource type occupies 1 bit, otherwise the resource type occupies 0 bit; and
7. padding bit.

In the case where SCI format 2-C carries the IUC information, the second part includes the following additional information:
1. trigger signaling or reference resource set indicator - 1 bit;
2. two combinations of {TRIV, FRIV, reservation period} *-* 2(*N_{TRIV}*+*N_{FRIV}*+*Y*) bits: *N_{TRIV}* = 9; ${N}_{FRIV} = \left⌈log2\left(\frac{{N}_{Subchannel}^{SL} \left({N}_{Subchannel}^{SL}+1\right) \left(2{N}_{Subchannel}^{SL}+1\right)}{6}\right)\right⌉ ;$ in the case where periodic resource reservation is allowed in a current resource pool, $Y = \left⌈{log}_{2} {N}_{rsv _ period}\right⌉$ bits, otherwise *Y =* 0 bit;
3. time-domain position of the first resource - 8 bits, which indicates an interval of the first resource in the second TRIV relative to a reference slot, where the unit is a slot, and the value range is 0-255;
4. reference slot - $10 + \left⌈{log}_{2}\left(10⋅{2}^{μ}\right)\right⌉$ bits, which indicates a DFN and slot index of the reference slot, and *µ* = 0,1,2,3 represents a subcarrier spacing index; and
5. frequency-domain position of the first resource - $2 ⋅ \left⌈{log}_{2}{N}_{Sbchannel}^{SL}\right⌉$ bits, which indicates a frequency-domain start position of the first resource in the first TRIV and a frequency-domain start position of the first resource in the second TRIV.

### VI. Energy saving for SL

In scenarios such as smart home and smart factory, SL communication may be used for communication of wearable devices. In these scenarios, it is extremely important to ensure low cost and low power consumption of devices. However, in a related SL communication system, a terminal needs to access a channel on unlicensed spectrum by LBT, and during LBT, a UE may need to sense a channel for a relatively long time and thus cannot enter a deep sleep state.

For SL communication over the unlicensed spectrum, in the case where the terminal has no available COT, the terminal needs to access a channel by using Type 1 channel access. In this process, the terminal may consume excessive energy. Based on the method provided in embodiments of the disclosure, the terminal can obtain COT, for example, in the case where an SL channel needs to be transmitted, thereby reducing the number of times the terminal performs Type 1 channel access.

FIG. 9 is a schematic flow chart of a method 900 for SL communication according to an embodiment of the disclosure. Optionally, the method may be applied to the system as illustrated in FIG. 1, but is not limited thereto. The method includes at least part of the following contents.

At S910, a first terminal shares COT with a second terminal when a first condition is satisfied.

In embodiments of the disclosure, the first terminal and the second terminal may both be terminals that can support SL communication. For example, the first terminal and the second terminal may both be SL terminals operating on unlicensed spectrum. When the first condition is satisfied, the first terminal may transmit COT sharing information to the second terminal, to share COT with the second terminal. In some examples, the first condition may include a local trigger condition. In this case, the first terminal may actively share COT with the second terminal. In some examples, the first condition may also include that the first terminal receives certain information. In this case, the first terminal may share COT with the second terminal in response to information from the second terminal.

In embodiments of the disclosure, when the first condition is satisfied, the first terminal can share COT with the second terminal, thereby increasing the likelihood of obtaining COT by the second terminal, and reducing energy consumption of the second terminal. For example, in the case where the second terminal has no available COT, the second terminal may receive COT from the first terminal and does not need to perform Type 1 channel access to obtain COT, thereby reducing energy consumed when performing Type 1 channel access.

FIG. 10 is a schematic flow chart of a method 1000 for SL communication according to another embodiment of the disclosure. The method may include one or more features of the above method for SL communication. In an embodiment, the method 1000 for SL communication further includes the following.

At S1010, a first terminal receives first information from a second terminal, where the first information is used for requesting the first terminal to provide COT.

At S1020, the first terminal shares COT with the second terminal.

In an embodiment, the first condition includes that the first terminal receives the first information. S1020 may be an implementation of S910. In this case, the first condition may mean that the first terminal receives from the second terminal request information for requesting the first terminal to provide COT, i.e., the first information. In the case where the first terminal receives the first information from the second terminal, the first terminal may transmit COT sharing information to the second terminal, to share COT. The second terminal may transmit the first information to the first terminal when a second condition is satisfied. For related explanations and examples of the second condition, reference can be made to related illustrations in embodiments of a method for SL communication performed by the second terminal below.

In an embodiment, the first information includes a CAPC and/or latest time for providing COT. In embodiments of the disclosure, a value of the CAPC in the first information may be used for limiting a value of a CAPC used by the first terminal to generate COT. In some examples, the greater the value of the CAPC, the lower the CAPC. For example, a CAPC with a value of 4 is smaller than a CAPC with a value of 3. The latest time for providing COT may be used for limiting latest time for transmitting the COT sharing information by the first terminal to the second terminal. The CAPC and/or the latest time for providing COT may be transmitted together or may be transmitted in different first information. Therefore, it is not limited in embodiments of the disclosure that there is only one first information, and multiple first information may be included.

In an embodiment, a length of time between receiving the first information by the first terminal and transmitting COT sharing information by the first terminal is less than the latest time for providing COT. For example, when the latest time for providing COT is 10 ms, a time interval between receiving the first information by the first terminal from the second terminal and transmitting the COT sharing information by the first terminal to the second terminal is not greater than 10 ms.

In an embodiment, a value of a CAPC used by the first terminal to generate COT is greater than or equal to a first value, where the first value is determined based on at least one of: a value of a CAPC in the first information, network configuration, pre-configuration, or definition in a standard. In embodiments of the disclosure, the first value may be used for limiting the value of the CAPC used by the first terminal to generate COT. There may be multiple manners for determining the first value. For example, the first value is carried in the first information. For example, when the value of the CAPC in the first information is 4, the value of the CAPC for generating COT may be greater than or equal to 4, such as 2 and 3. That is to say, the CAPC for generating COT may be lower than or equal to the CAPC in the first information. The first value may also be carried in other information, for example, configuration information, pre-configuration information, or the like transmitted by a network to the first terminal. The first value may also be defined in a terminal according to a standard or a protocol.

In an embodiment, the first information is transmitted via first-stage SCI. For example, the first information is carried in first-stage SCI transmitted by the second terminal to the first terminal.

In an embodiment, the first-stage SCI contains an indication field. The indication field indicates at least one of: whether the second terminal needs the first terminal to share COT; or a CAPC of COT expected by the second terminal.

In embodiments of the disclosure, one or more indication bits may be contained in the indication field of the first-stage SCI. For example, an indication field is added in the first-stage SCI to indicate whether the second terminal needs the first terminal to share COT. Another indication field may be added in the first-stage SCI to indicate a CAPC of expected COT.

For example, an indication bit in the first-stage SCI indicates whether the second terminal needs the first terminal to share COT. When a value of the indication bit is 1, it indicates that the second terminal needs the first terminal to share COT. When a value of the indication bit is 0, it indicates that the second terminal does not need the first terminal to share COT. Two indication bits in the first-stage SCI indicate a CAPC of COT expected by the second terminal. Values 00, 01, 10, and 11 of the two indication bits correspond to CAPC values 1, 2, 3, and 4, respectively.

For another example, two indication bits in the first-stage SCI indicates whether the second terminal needs the first terminal to share COT. When a value of the two indication bits is 01, it indicates that the second terminal needs the first terminal to share COT. When a value of the two indication bits is 11, it indicates that the second terminal does not need the first terminal to share COT. Three indication bits in the first-stage SCI indicate a CAPC of COT expected by the second terminal. Values 001, 010, 011, and 100 of the two indication bits correspond to CAPC values 1, 2, 3, and 4, respectively.

The values of indication bits in the above examples are merely taken as examples rather than limitations, and the value of indication bits and corresponding meaning thereof can be flexibly changed according to requirements.

In an embodiment, the first-stage SCI containing the first information is transmitted with SL data. For example, when the second terminal transmits SL data to the first terminal, the first-stage SCI containing the first information is transmitted in the same slot. Upon reception of the first-stage SCI and the SL data, the first terminal may determine, according to the first information in the first-stage SCI, whether the first terminal needs to share COT with the second terminal. If it needs to share COT, the first-stage SCI may further contain information such as latest time when it needs to share COT.

In an embodiment, the first information is transmitted via second-stage SCI and/or a medium access control (MAC) control element (CE). For example, when the second terminal transmits second-stage SCI and/or an MAC CE to the first terminal, the second terminal carries the first information in the second-stage SCI and/or the MAC CE. After receiving the second-stage SCI and/or the MAC CE, the first terminal may determine, from the first information in the second-stage SCI and/or the MAC CE, whether the first terminal needs to share COT with the second terminal. If it needs to share COT, the second-stage SCI and/or the MAC CE may further contain information such as latest time when it needs to share COT.

In an embodiment, for the second-stage SCI for transmitting the first information, a newly-defined second-stage SCI format is used, or an existing second-stage SCI format is re-used.

In an embodiment, a format of the second-stage SCI includes a first part and a second part. The first part includes a bit field(s) other than a unicast/multicast/broadcast indication field in SCI format 2-A. The second part includes at least one of: a COT request; or a CAPC. The second part may further include one or more of: trigger signaling or reference resource set indicator, priority, the number of subchannels, resource reservation period, resource selection window, resource type, or padding bit.

In an embodiment, the format of the second-stage SCI is SCI format 2-C.

In an embodiment, the MAC CE contains first indication information. The first indication information indicates a COT request and a CAPC.

In an embodiment, the first indication information is in a newly-added field outside an IUC request MAC CE. For example, a field (an example of the first indication information) is added to the "IUC request MAC CE", to indicate a COT request and a CAPC.

In an embodiment, the MAC CE contains second indication information and third indication information. The second indication information indicates a COT request, and the third indication information indicates a CAPC.

In an embodiment, the second indication information is in an R field of an IUC request MAC CE, and the third indication information is in a newly-added field outside the IUC request MAC CE. For example, the R field (an example of the second indication information) of the "IUC request MAC CE" indicates a COT request, and a field (an example of the third indication information) is added to indicate a CAPC.

In an embodiment, the first information is second-stage SCI containing an IUC request and/or an MAC CE containing an IUC request, and the first information is used for triggering the first terminal to provide COT when the first terminal is a reduced-capability (RedCap) terminal. For example, when the second terminal transmits an IUC request to the first terminal through SCI 2-C and/or an "IUC request MAC CE', the first terminal may be triggered to provide COT to the second terminal. The first terminal may be a RedCap terminal, and the RedCap terminal may also be referred to as a low-capability terminal.

In an embodiment, the RedCap terminal satisfies at least one of the following conditions: supporting a receive antenna; a maximum transmission bandwidth is less than a specific bandwidth, for example, 20 MHz; a maximum modulation order is less than or equal to a specific order, for example, 64 quadrature amplitude modulation (QAM); or belonging to a type of devices defined in a standard, for example, a wearable device.

In an embodiment, the first condition includes that: the first terminal feeds back NACK information to the second terminal. In embodiments of the disclosure, the first terminal may actively transmit COT sharing information to the second terminal based on the first condition, to share COT. That is to say, the first terminal may actively share COT even if the first terminal receives no first information. For example, in the case where the first terminal receives first SL information from the second terminal and needs to feed back to the second terminal NACK information for the first SL information, the first terminal may also transmit COT sharing information to the second terminal. In a remaining duration of COT shared by the first terminal, at least a resource reserved by the second terminal for retransmission may be included. The second terminal may reserve resources for retransmission via the above first SL information.

In an embodiment, COT sharing information transmitted by the first terminal to the second terminal is in the NACK information or is transmitted with the NACK information. For example, the first terminal may carry the COT sharing information in the NACK information transmitted by the first terminal to the second terminal. For another example, the first terminal may transmit the NACK information and the COT sharing information to the second terminal together via the same message or channel. In embodiments of the disclosure, when feeding back an NACK to the second terminal, the first terminal may actively share COT with the second terminal, and the second terminal may obtain the COT without channel access, thereby reducing communication time and improving communication efficiency. For example, after receiving from the first terminal an NACK feedback carrying the COT sharing information, the second terminal does not need to increase a CW for generating *Nᵢₙᵢₜ*, and thus the time of Type 1 channel access will not be increased.

In an embodiment, a value of a CAPC used by the second terminal to generate COT is greater than or equal to a second value, where the second value is determined based on at least one of: a value of a CAPC of data corresponding to the NACK information, network configuration, pre-configuration, or definition in a standard. In embodiments of the disclosure, the second value may be used for limiting the value of the CAPC used by the second terminal to generate COT. The second value may be a value of a CAPC of data corresponding to NACK, which may indicate that the CAPC of the data corresponding to the NACK is lower than or equal to the CAPC of the data corresponding to the NACK. For example, the value of the CAPC of the data corresponding to the NACK is 3, and the value of the CAPC used by the second terminal to generate COT is 4. The CAPC of the data corresponding to the NACK is greater than the CAPC used by the second terminal to generate COT.

In an embodiment, the value of the CAPC of the data corresponding to the NACK information is indicated via second-stage SCI.

In an embodiment, the first condition includes: prior to a reserved resource of the second terminal.

In an embodiment, the method further includes the following. The first terminal obtains a time-domain position of a resource reserved by the second terminal for transmitting data to the first terminal. In embodiments of the disclosure, in the case where the first terminal receives SCI transmitted by the second terminal, and the SCI indicates that a retransmission resource for transmitting data to the first terminal is reserved, the first terminal may share COT with the second terminal. By receiving higher-layer signaling such as an MAC CE or PC5 RRC transmitted by the second terminal, the first terminal may determine a CAPC of data to-be-transmitted by terminal A.

In an embodiment, the first condition includes that: a value of a CAPC of data to-be-transmitted by the second terminal is greater than or equal to a third value. The third value is determined based on at least one of: network configuration, pre-configuration, or definition in a standard.

In an embodiment, the value of the CAPC of the data to-be-transmitted is determined based on higher-layer signaling such as an MAC CE or PC5 RRC from the second terminal.

In an embodiment, the first condition includes that: the second terminal is a RedCap terminal and an ID of the second terminal is known. For example, when a unicast connection exists between the first terminal and the second terminal, and the second terminal is a RedCap terminal, terminal B may share COT with terminal A, and a time interval between two consecutive COTs shared by terminal B with the second terminal may be less than or equal to *Y*. The second terminal may determine through higher-layer signaling whether terminal A is a RedCap terminal. A value of *Y* may be indicated by terminal A to the second terminal through higher-layer signaling, or may be configured or pre-configured by the network or defined in a standard.

In an embodiment, a time interval between two consecutive COTs shared by the first terminal with the second terminal is less than or equal to a specified time interval. For example, the second terminal may be a RedCap terminal. In the case where the specified time interval is 10 ms, a time interval between the first time for which the first terminal shares COT with the second terminal and the second time for which the first terminal shares COT with the second terminal is less than or equal to 10 ms, and a time interval between the second time for which the first terminal shares COT with the second terminal and the third time for which the first terminal shares COT with the second terminal is less than or equal to 10ms, and so on, which will not be elaborated.

In an embodiment, the time interval between two consecutive COTs shared by the first terminal with the second terminal may also satisfy a specified period.

In an embodiment, the time interval between two consecutive COTs shared by the first terminal with the second terminal may also not be limited. For example, when the first condition is satisfied, the first terminal shares COT with the second terminal.

In an embodiment, the specified time interval is determined based on at least one of: higher-layer signaling from the second terminal, network configuration, pre-configuration, or definition in a standard. For example, the first terminal may receive higher-layer signaling such as an MAC CE or PC5 RRC from the second terminal, where the higher-layer signaling may indicate the specified time interval. For another example, the first terminal may receive configuration information from the network, where the configuration information may indicate the specified time interval.

In an embodiment, in a duration indicated by COT sharing information transmitted by the first terminal to the second terminal, one or more reserved resources of the second terminal are included. For example, the one or more reserved resources of the second terminal may include one or more reserved time-domain positions of the second terminal. After receiving the COT sharing information from the first terminal, the second terminal may access a channel by using Type 2 access according to the one or more reserved time-domain positions in the COT sharing information.

In an embodiment, COT sharing information transmitted by the first terminal to the second terminal is transmitted via second-stage SCI and/or an MAC CE. For example, when the first terminal transmits second-stage SCI and/or an MAC CE to the second terminal, the first terminal carries the COT sharing information in the second-stage SCI and/or the MAC CE. After receiving the second-stage SCI and/or the MAC CE, the second terminal may obtain, from the COT sharing information in the second-stage SCI and/or the MAC CE, the COT shared by the first terminal.

In an embodiment, COT sharing information transmitted by the first terminal to the second terminal is transmitted with SL data and/or an MAC CE. For example, when the first terminal transmits SL data and/or an MAC CE to the second terminal, the first terminal transmits, in the same slot, the second-stage SCI containing the COT sharing information.

In an embodiment, an MAC CE for carrying the COT sharing information contains at least one of: a CAPC, indicating a value of a CAPC of shared COT; a transmission type for the shared COT, including unicast, broadcast, or multicast for feeding back ACK or NACK; a COT sharing ID, indicating an ID of the first terminal and/or an ID of the second terminal; or a remaining COT duration.

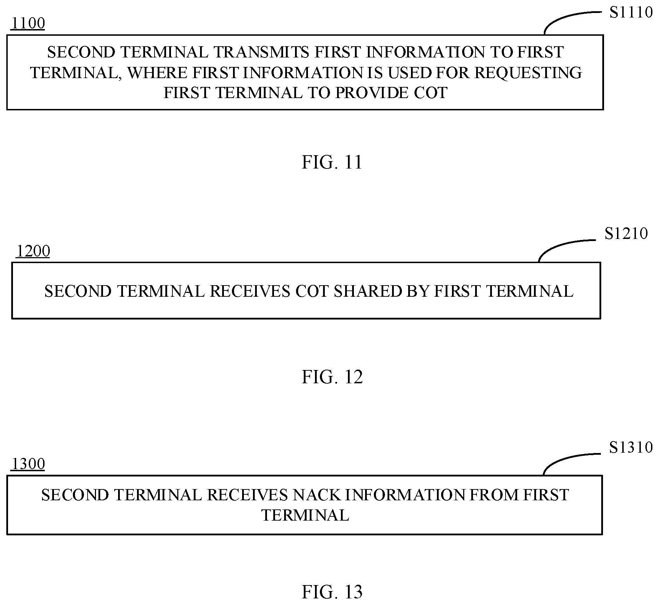

FIG. 11 is a schematic flow chart of a method 1100 for SL communication according to another embodiment of the disclosure. Optionally, the method may be applied to the system as illustrated in FIG. 1, but is not limited thereto. The method includes at least part of the following contents.

At S1110, a second terminal transmits first information to a first terminal, where the first information is used for requesting the first terminal to provide COT. In embodiments of the disclosure, for related explanations and examples of the first information, reference can be made to related illustrations in the methods 900 and 1000 for SL communication performed by the first terminal above.

In an embodiment, a second condition for transmitting the first information by the second terminal includes at least one of the following. Data that needs to be transmitted to the first terminal exists in a logical channel of the second terminal; the second terminal is capable of determining a CAPC of the data that needs to be transmitted to the first terminal; the second terminal is capable of determining the CAPC of the data that needs to be transmitted to the first terminal, and the CAPC is greater than or equal to a specified value, for example, 3 or 4; the second terminal is to transmit SL data to the first terminal, and an SL grant for carrying the SL data is capable of carrying the first information; or the second terminal determines, according to an implementation of the second terminal, whether to transmit the first information to the first terminal.

In embodiments of the disclosure, the second terminal may determine, according to the implementation of the second terminal, whether to transmit the first information to the first terminal as follows. The second terminal determines, according to any other second condition, whether to transmit the first information to the first terminal.

FIG 12 is a schematic flow chart of a method 1200 for SL communication according to another embodiment of the disclosure. The method may include one or more features of the above method for SL communication. In an embodiment, after operations at S1110, the method 1200 for SL communication further includes the following.

At S1210, the second terminal receives the COT shared by the first terminal. For example, the second terminal receives COT sharing information from the first terminal, where the COT sharing information may include the COT shared by the first terminal.

In an embodiment, the first information includes a CAPC and/or latest time for providing COT.

In an embodiment, a length of time between receiving the first information by the first terminal and transmitting COT sharing information by the first terminal is less than the latest time for providing COT.

In an embodiment, a value of a CAPC used by the first terminal to generate COT is greater than or equal to a first value. The first value is determined based on at least one of: a value of a CAPC in the first information, network configuration, pre-configuration, or definition in a standard.

In an embodiment, the first information is transmitted via first-stage SCI.

In an embodiment, the first-stage SCI contains an indication field. The indication field indicates at least one of: whether the second terminal needs the first terminal to share COT; or a CAPC of COT expected by the second terminal.

In an embodiment, the first-stage SCI containing the first information is transmitted with SL data.

In an embodiment, the first information is transmitted via second-stage SCI and/or an MAC CE.

In an embodiment, for the second-stage SCI for transmitting the first information, a newly-defined second-stage SCI format is used, or an existing second-stage SCI format is re-used.

In an embodiment, a format of the second-stage SCI includes a first part and a second part. The first part includes bit fields other than a unicast/multicast/broadcast indication field in SCI format 2-A. The second part includes at least one of: a COT request; or a CAPC.

In an embodiment, the format of the second-stage SCI is SCI format 2-C.

In an embodiment, the MAC CE contains first indication information. The first indication information indicates a COT request and a CAPC.

In an embodiment, the first indication information is in a newly-added field outside an IUC request MAC CE.

In an embodiment, the MAC CE contains second indication information and third indication information. The second indication information indicates a COT request, and the third indication information indicates a CAPC.

In an embodiment, the second indication information is in an R field of an IUC request MAC CE, and the third indication information is in a newly-added field outside the IUC request MAC CE.

In an embodiment, the first information is second-stage SCI containing an IUC request and/or an MAC CE containing an IUC request, and the first information is used for triggering the first terminal to provide COT when the first terminal is a RedCap terminal.

In an embodiment, the RedCap terminal satisfies at least one of the following conditions: supporting a receive antenna; a maximum transmission bandwidth is less than a specific bandwidth; a maximum modulation order is less than or equal to a specific order; or belonging to a type of devices defined in a standard.

FIG. 13 is a schematic flow chart of a method 1300 for SL communication according to another embodiment of the disclosure. Optionally, the method may be applied to the system as illustrated in FIG. 1, but is not limited thereto. The method includes at least part of the following contents.

At S1310, the second terminal receives NACK information from the first terminal. In embodiments of the disclosure, after the second terminal transmits SL information to the first terminal, the first terminal may need to feed back the NACK information to the second terminal. In this case, when the first condition is satisfied, the first terminal may actively transmit COT sharing information to the second terminal. For details, reference can be made to related illustrations of the first condition in the above embodiments.

In an embodiment, COT sharing information from the first terminal is in the NACK information or is transmitted with the NACK information.

In an embodiment, a value of a CAPC used by the second terminal to generate COT is greater than or equal to a second value. The second value is determined based on at least one of: a value of a CAPC of data corresponding to the NACK information, network configuration, pre-configuration, or definition in a standard.

In an embodiment, the value of the CAPC of the data corresponding to the NACK information is indicated via second-stage SCI.

In an embodiment, COT sharing information from the first terminal is prior to a reserved resource of the second terminal. For example, the SL information transmitted by the second terminal to the first terminal contains the reserved resource of the second terminal. Prior to the reserved resource of the second terminal, when the first condition is satisfied, the first terminal may actively transmit the COT sharing information to the second terminal.

In an embodiment, the reserved resource of the second terminal includes a time-domain position of a resource reserved by the second terminal for transmitting data to the first terminal.

In an embodiment, a value of a CAPC of data to-be-transmitted by the second terminal is greater than or equal to a third value. The third value is determined based on at least one of: network configuration, pre-configuration, or definition in a standard.

In an embodiment, the value of the CAPC of the data to-be-transmitted is determined based on higher-layer signaling from the second terminal.

In an embodiment, the second terminal is a RedCap terminal and an ID of the second terminal is known. In this case, when the first condition is satisfied, the second terminal may actively transmit the COT sharing information to the second terminal.

In an embodiment, a time interval between two consecutive COTs shared by the first terminal is less than or equal to a specified time interval.

In an embodiment, the specified time interval is determined based on at least one of: higher-layer signaling from the second terminal, network configuration, pre-configuration, or definition in a standard.

In an embodiment, in a duration indicated by COT sharing information from the first terminal, one or more reserved resources of the second terminal are included.

In an embodiment, COT sharing information from the first terminal is transmitted via second-stage SCI and/or an MAC CE.

In an embodiment, COT sharing information from the first terminal is transmitted with SL data and/or an MAC CE.

In an embodiment, an MAC CE for carrying the COT sharing information contains at least one of: a CAPC, indicating a value of a CAPC of shared COT; a transmission type for the shared COT, including unicast, broadcast, or multicast for feeding back ACK or NACK; a COT sharing ID, indicating an ID of the first terminal and/or an ID of the second terminal; or a remaining COT duration.

For specific examples of performing the methods 1100, 1200, and 1300 for SL communication by the second terminal in this embodiment, reference can be made to related illustrations of the second terminal in the above methods 900 and 1000, which will not be elaborated herein for the sake of simplicity.

In the method for SL communication in embodiments of the disclosure, a method for obtaining COT and a device are included. There are mainly the following examples of the method.

Method 1: Terminal A transmits request information to terminal B to request terminal B to provide COT. In particular, the request information includes a CAPC and latest time for providing COT. A CAPC used by terminal B to generate COT cannot be greater than the CAPC indicated in the request information. COT sharing information is carried in second-stage SCI, and may be transmitted with data or an MAC CE.

Method 2: When a specific condition is satisfied, terminal B actively provides COT to terminal A. There may be the following examples of the specific condition: upon feeding back NACK to terminal A; or, prior to a reserved resource of terminal A; or, when a CAPC of data to-be-transmitted by terminal A is greater than a specific value; or, terminal A is a RedCap terminal and an ID of terminal A is known to terminal B.

In embodiments of the disclosure, terminal A is a terminal for obtaining COT, and terminal B is a terminal for providing COT. Terminal A may be a RedCap terminal or any type of terminal. The RedCap terminal refers to a type of terminal satisfying a specific condition. For example, the RedCap terminal may satisfy at least one of the following conditions: supporting a receive antenna; a maximum transmission bandwidth is less than a specific value, for example, 20 MHz; a maximum modulation order is less than or equal to a specific value, for example, 64 QAM; or belonging to a certain type of devices defined in a standard.

In embodiments of the disclosure, terminal B may transmit COT sharing information via second-stage SCI and/or an MAC CE. In the case where information is shared via an MAC CE, an ID of a logical channel corresponding to the MAC CE may be located between 20 and 55, and the MAC CE contains at least the following fields: a CAPC, indicating a value of a CAPC of shared COT; a transmission type for the shared COT, i.e., unicast, broadcast, or multicast for feeding back ACK or NACK; a COT sharing ID, indicating an ID of terminal A and an ID of terminal B; or a remaining COT duration.

Example 1: Terminal A transmits request information to terminal B to request terminal B to provide COT.

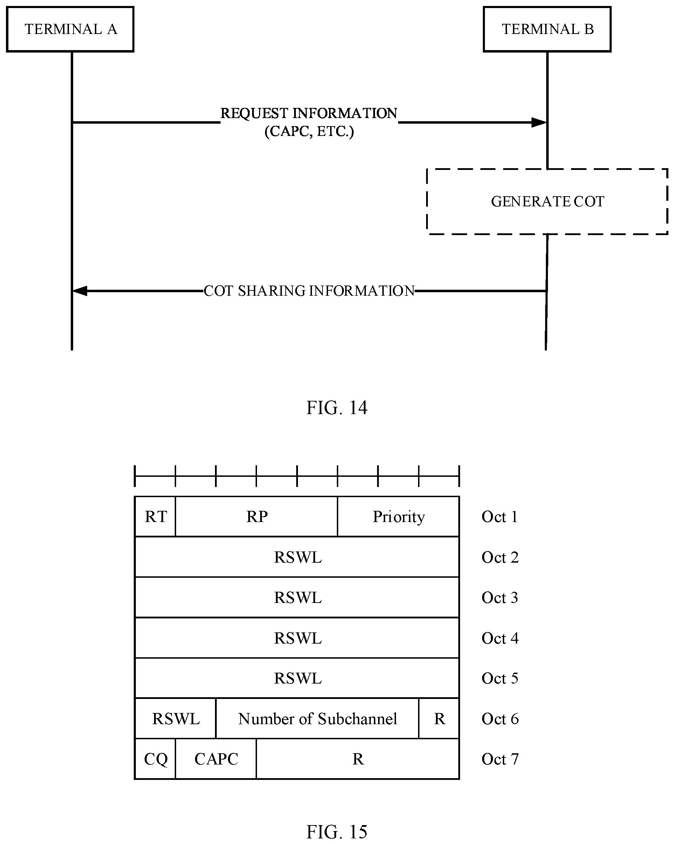

In this example, terminal A may transmit the request information to terminal B when a specific condition is satisfied, and after receiving the request information from terminal A, terminal B shares COT with terminal A. The process is as illustrated in FIG. 14.

S1, terminal A may transmit the request information to terminal B when one of the following conditions is satisfied:
condition 1-1: data that needs to be transmitted to terminal B exists in a logical channel of terminal A; and/or,
condition 1-2: terminal A is capable of determining a CAPC of the data that needs to be transmitted to terminal B; and/or,
condition 1-3: terminal A is capable of determining the CAPC of the data that needs to be transmitted to terminal B, and a value of the CAPC is greater than or equal to 3 or 4; and/or,
condition 1-4: terminal A is to transmit SL data to terminal B, and an SL grant for carrying the SL data is capable of carrying the request information; and/or,
condition 1-5: terminal A determines, according to an implementation of terminal A such as any one of conditions 1-1 to 1-4, whether to transmit the request information to terminal B.

### Method 1-1 for transmitting the request information:

The request information may be transmitted via first-stage SCI. For example, at least one field with a length of 1 bit is added in the first-stage SCI to indicate whether terminal A needs terminal B to share COT. Alternatively, one more additional field may be added in the first-stage SCI to indicate a CAPC of expected COT. To avoid separate transmission of the first-stage SCI, when the request information is transmitted via the first-stage SCI, the request information may be transmitted with data.

### Method 1-2 for transmitting the request information:

As another alternative solution, the request information may be transmitted via second-stage SCI and/or an MAC CE. For the second-stage SCI, a newly-defined second-stage SCI format may be used, or an existing second-stage SCI format may be re-used. For example, the request information may be transmitted via SCI format 2-C. In this case, information in SCI format 2-C includes two parts, where the first part includes bit fields other than a "unicast/multicast/broadcast indication" field in SCI format 2-A, and the second part includes the following additional information:
(1) trigger signaling or reference resource set indicator - 1 bit: set to 1;
(2) priority - 3 bits;
(3) the number of subchannels - $\left⌈{log}_{2}{N}_{Sbchannel}^{SL}\right⌉$ bits, where ${N}_{Subchannel}^{SL}$ represents the number of subchannels in a current resource pool;
(4) resource reservation period: in the case where periodic resource reservation is allowed in the current resource pool, the resource reservation period occupies $\left⌈{log}_{2}{N}_{rsv _ period}\right⌉$ bits, where *N_{rsv_period}* represents the total number of resource reservation periods configured in the current resource pool; and in the case where periodic resource reservation is not allowed in the current resource pool, the resource reservation period occupies 0 bit;
(5) resource selection window - $2 \left(10+\left⌈{log}_{2}\left(10⋅{2}^{μ}\right)\right⌉\right)$ bits, which indicates DFNs and slot indexes corresponding to a start point and an end point of the resource selection window, and *µ* = 0,1,2,3 represents a subcarrier spacing index;
(6) resource type: in the case where the current resource pool is configured to have the resource type determined by UE-B, the resource type occupies 1 bit, otherwise the resource type occupies 0 bit;
(7) COT request - 1 bit.
(8) CAPC - *X* bit(s) if a value of a COT request field is 1, otherwise absent, where a value of *X* is 1 or 2. When *X* is 1 bit, a value of 0 corresponds to a CAPC value of 3, a value of 1 corresponds to a CAPC value of 4. When *X* is 2 bits, a value of 00 corresponds to a CAPC value of 1, a value of 01 corresponds to a CAPC value of 2, a value of 10 corresponds to a CAPC value of 3, and a value of 11 corresponds to a CAPC value of 4; and
(9) padding bit.

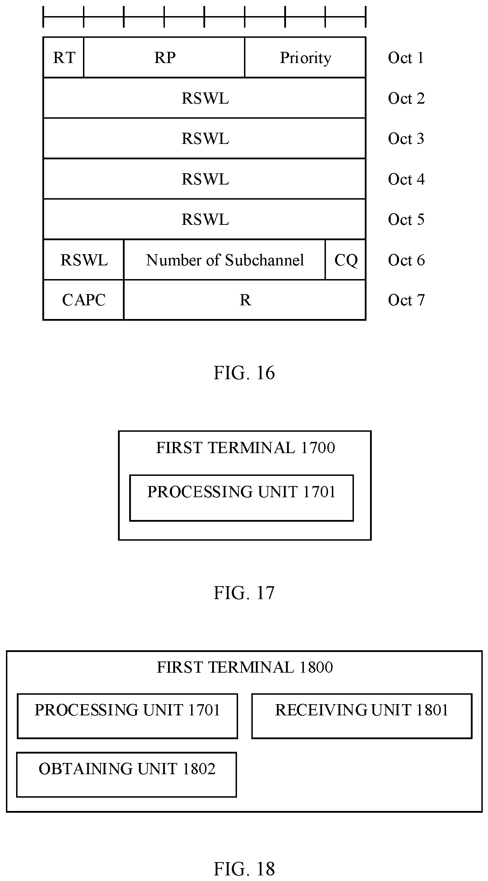

In the case where an MAC CE is used for carrying request information, an 8-bit field may be added to an "IUC request MAC CE", to indicate a COT request and a CAPC, as illustrated in FIG. 15. Alternatively, an R field of the "IUC request MAC CE" indicates a COT request, and an 8-bit field is added to indicate a CAPC, as illustrated in FIG. 16. The MAC CE corresponds to an ID of a logical channel between 20 and 55. In FIGs. 15 and 16, CQ fields represents a COT request, and priority fields represents a priority

### Method 1-3 for transmitting the request information:

As another alternative solution, the request information is transmitted via SCI 2-C and/or an "IUC request MAC CE". In the case where terminal A is a RedCap terminal, when terminal A transmits an IUC request to terminal B via SCI 2-C and/or the "IUC request MAC CE", terminal B is also triggered to provide COT. Terminal B may obtain a type of terminal A through higher-layer signaling, such as PC5 RRC signaling. It is assumed that a CAPC of COT that needs to be provided by terminal B to terminal A is a specific value, such as 4, to ensure that terminal A can use the COT to transmit data corresponding to any CAPC.

S2, after receiving a request from terminal A in slot *n*, terminal B may transmit COT sharing information to terminal A before slot *n*+*T*. A value of *T* may be indicated by terminal A to terminal B through higher-layer signalling, such as PC5 RRC signaling. In addition, a value of a CAPC used by terminal B to generate COT is greater than or equal to a value of a CAPC indicated in the request information or a default value of a CAPC in indication information. The greater a value of a CAPC, the lower the CAPC.

Example 2: when a specific condition is satisfied, terminal B actively shares COT with terminal A.

### Example 2-1:

After receiving an NACK feedback from terminal B, terminal A may increase a CW for generating *Nᵢₙᵢₜ*, thereby increasing the time of Type 1 channel access. To avoid this problem, when terminal B feeds back NACK to terminal A, terminal B can actively share COT with terminal A. A shared COT satisfies the following characteristics.
(1) A value of a CAPC for generating COT is greater than or equal to *X*. *X* may be a CAPC of data corresponding to NACK fed back, and the CAPC of the data may be indicated via an MAC CE. Alternatively, *X* is a value configured or pre-configured by a network or defined in a standard, for example, *X* may be defined as 4 in a standard.
(2) A remaining duration of the COT shared by terminal B may be able to contain at least a resource reserved by terminal A for retransmission, such as a duration for retransmission.

### Example 2-2:

As another option, when terminal B obtains a time-domain position of a resource reserved by terminal A for transmitting data to terminal B, and/or terminal B obtains that a value of a CAPC of data to-be-transmitted by terminal A is greater than or equal to a specific value, terminal B may actively share COT with terminal A. For example, when terminal B receives SCI transmitted by terminal A, and the SCI indicates that a retransmission resource for transmitting data to terminal B is reserved, terminal B may share COT with terminal A. By receiving higher-layer signaling such as an MAC CE or PC5 RRC transmitted by terminal A, terminal B may determine a CAPC of data to-be-transmitted by terminal A.

### Example 2-3:

When a unicast connection exists between terminal B and terminal A, and terminal A is a RedCap terminal, terminal B may share COT with terminal A, and a time interval between two consecutive COTs shared by terminal B to terminal A may be less than or equal to *Y*. Terminal B may determine through higher-layer signaling whether terminal A is a RedCap terminal. A value of *Y* may be indicated by terminal A to terminal B through higher-layer signaling, or may be configured or pre-configured by a network or defined in a standard.

In embodiments of the disclosure, whether to share COT with terminal A can be determined according to an implementation of terminal B. However, in the COT shared by terminal B to terminal A, at least a reserved resource of terminal A is included, and a value of a CAPC for generating COT is greater than or equal to *X*. A value of *X* is configured or pre-configured by a network or defined in a standard, for example, *X* may be defined as 4 in a standard.

A method for obtaining COT by a terminal and a device are proposed in the disclosure. According to the method proposed in the disclosure, the likelihood of obtaining COT by the terminal can be increased, and energy consumed by the terminal when performing Type 1 channel access can be reduced.

FIG. 17 is a schematic block diagram of a first terminal 1700 according to an embodiment of the disclosure. The first terminal 1700 may include a processing unit 1701. The processing unit 1701 is configured to share COT with a second terminal when a first condition is satisfied.

FIG. 18 is a schematic flow chart of a first terminal 1800 according to another embodiment of the disclosure. The first terminal 1800 may include one or more features of the above first terminal. In an embodiment, the first terminal further includes a receiving unit 1801. The receiving unit 1801 is configured to receive first information from the second terminal. The first information is used for requesting the first terminal to provide COT.

In an embodiment, the first condition includes that the first terminal receives the first information.

In an embodiment, the first information includes a CAPC and/or latest time for providing COT.

In an embodiment, a length of time between receiving the first information by the first terminal and transmitting COT sharing information by the first terminal is less than the latest time for providing COT.

In an embodiment, a value of a CAPC used by the first terminal to generate COT is greater than or equal to a first value. The first value is determined based on at least one of: a value of a CAPC in the first information, network configuration, pre-configuration, or definition in a standard.

In an embodiment, the first information is transmitted via first-stage SCI.

In an embodiment, the first-stage SCI contains an indication field. The indication field indicates at least one of: whether the second terminal needs the first terminal to share COT; or a CAPC of COT expected by the second terminal.

In an embodiment, the first-stage SCI containing the first information is transmitted with SL data.

In an embodiment, the first information is transmitted via second-stage SCI and/or an MAC CE.

In an embodiment, for the second-stage SCI for transmitting the first information, a newly-defined second-stage SCI format is used, or an existing second-stage SCI format is re-used.

In an embodiment, a format of the second-stage SCI includes a first part and a second part. The first part includes bit fields other than a unicast/multicast/broadcast indication field in SCI format 2-A. The second part includes at least one of: a COT request; or a CAPC.

In an embodiment, the format of the second-stage SCI is SCI format 2-C.

In an embodiment, the MAC CE contains first indication information. The first indication information indicates a COT request and a CAPC.

In an embodiment, the first indication information is in a newly-added field outside an IUC request MAC CE.

In an embodiment, the MAC CE contains second indication information and third indication information. The second indication information indicates a COT request, and the third indication information indicates a CAPC.

In an embodiment, the second indication information is in an R field of an IUC request MAC CE, and the third indication information is in a newly-added field outside the IUC request MAC CE.

In an embodiment, the first information is second-stage SCI containing an IUC request and/or an MAC CE containing an IUC request, and the first information is used for triggering the first terminal to provide COT when the first terminal is a RedCap terminal.

In an embodiment, the RedCap terminal satisfies at least one of the following conditions: supporting a receive antenna; a maximum transmission bandwidth is less than a specific bandwidth; a maximum modulation order is less than or equal to a specific order; or belonging to a type of devices defined in a standard.

In an embodiment, the first condition includes that: the first terminal feeds back NACK information to the second terminal.

In an embodiment, COT sharing information transmitted by the first terminal to the second terminal is in the NACK information or is transmitted with the NACK information.

In an embodiment, a value of a CAPC used by the second terminal to generate COT is greater than or equal to a second value. The second value is determined based on at least one of: a value of a CAPC of data corresponding to the NACK information, network configuration, pre-configuration, or definition in a standard.

In an embodiment, the value of the CAPC of the data corresponding to the NACK information is indicated via second-stage SCI.

In an embodiment, the first condition includes: prior to a reserved resource of the second terminal.

In an embodiment, the first terminal further includes an obtaining unit 1802. The obtaining unit 1802 is configured to obtain a time-domain position of a resource reserved by the second terminal for transmitting data to the first terminal.

In an embodiment, the first condition includes that: a value of a CAPC of data to-be-transmitted by the second terminal is greater than or equal to a third value. The third value is determined based on at least one of: network configuration, pre-configuration, or definition in a standard.

In an embodiment, the value of the CAPC of the data to-be-transmitted is determined based on higher-layer signaling from the second terminal.

In an embodiment, the first condition includes that: the second terminal is a RedCap terminal and an ID of the second terminal is known.

In an embodiment, a time interval between two consecutive COTs shared by the first terminal with the second terminal is less than or equal to a specified time interval.

In an embodiment, the specified time interval is determined based on at least one of: higher-layer signaling from the second terminal, network configuration, pre-configuration, or definition in a standard.

In an embodiment, in a duration indicated by COT sharing information transmitted by the first terminal to the second terminal, one or more reserved resources of the second terminal are included.

In an embodiment, COT sharing information transmitted by the first terminal to the second terminal is transmitted via second-stage SCI and/or an MAC CE.

In an embodiment, COT sharing information transmitted by the first terminal to the second terminal is transmitted with SL data and/or an MAC CE.

In an embodiment, an MAC CE for carrying the COT sharing information contains at least one of: a CAPC, indicating a value of a CAPC of a shared COT; a transmission type for the shared COT, including unicast, broadcast, or multicast for feeding back ACK or NACK; a COT sharing ID, indicating an ID of the first terminal and/or an ID of the second terminal; or a remaining COT duration.

The first terminals 1700 and 1800 in embodiments of the disclosure can implement corresponding functions of the first terminal in the foregoing method embodiments. For the procedure, function, implementation, and advantage corresponding to each module (sub-module, unit, or assembly, etc.) in the first terminals 1700 and 1800, reference can be made to the corresponding illustrations in the foregoing method embodiments, which will not be repeated herein. It may be noted that, the functions of various modules (sub-modules, units, or assemblies, etc.) in the first terminals 1700 and 1800 described in embodiments of the disclosure may be implemented by different modules (sub-modules, units, or assemblies, etc.), or may be implemented by the same module (sub-module, unit, or assembly, etc.).

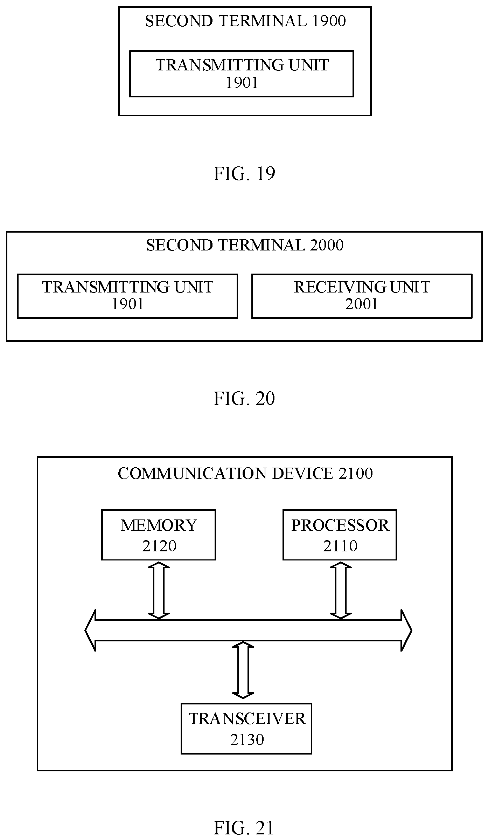

FIG. 19 is a schematic block diagram of a second terminal 1900 according to an embodiment of the disclosure. The second terminal 1900 may include a transmitting unit 1901. The transmitting unit 1901 is configured to transmit first information to a first terminal. The first information is used for requesting the first terminal to provide COT.

In an embodiment, a second condition for transmitting the first information by the second terminal includes at least one of the following. Data that needs to be transmitted to the first terminal exists in a logical channel of the second terminal; the second terminal is capable of determining a CAPC of the data that needs to be transmitted to the first terminal; the second terminal is capable of determining the CAPC of the data that needs to be transmitted to the first terminal, and the CAPC is greater than or equal to a specified value; the second terminal is to transmit SL data to the first terminal, and an SL grant for carrying the SL data is capable of carrying the first information; or the second terminal determines, according to an implementation of the second terminal, whether to transmit the first information to the first terminal.

FIG. 20 is a schematic flow chart of a second terminal 2000 according to another embodiment of the disclosure. The second terminal 2000 may include one or more features of the above second terminal. In an embodiment, the second terminal further includes a receiving unit 2001. The receiving unit 2001 is configured to receive COT shared by the first terminal.

In an embodiment, the first information includes a CAPC and/or latest time for providing COT.

In an embodiment, a length of time between receiving the first information by the first terminal and transmitting COT sharing information by the first terminal is less than the latest time for providing COT.

In an embodiment, a value of a CAPC used by the first terminal to generate COT is greater than or equal to a first value. The first value is determined based on at least one of: a value of a CAPC in the first information, network configuration, pre-configuration, or definition in a standard.

In an embodiment, the first information is transmitted via first-stage SCI.

In an embodiment, the first-stage SCI contains an indication field. The indication field indicates at least one of: whether the second terminal needs the first terminal to share COT; or a CAPC of COT expected by the second terminal.

In an embodiment, the first-stage SCI containing the first information is transmitted with SL data.

In an embodiment, the first information is transmitted via second-stage SCI and/or an MAC CE.

In an embodiment, for the second-stage SCI for transmitting the first information, a newly-defined second-stage SCI format is used, or an existing second-stage SCI format is re-used.

In an embodiment, a format of the second-stage SCI includes a first part and a second part. The first part includes bit fields other than a unicast/multicast/broadcast indication field in SCI format 2-A. The second part includes at least one of: a COT request; or a CAPC.

In an embodiment, the format of the second-stage SCI is SCI format 2-C.

In an embodiment, the MAC CE contains first indication information. The first indication information indicates a COT request and a CAPC.

In an embodiment, the first indication information is in a newly-added field outside an IUC request MAC CE.

In an embodiment, the MAC CE contains second indication information and third indication information. The second indication information indicates a COT request, and the third indication information indicates a CAPC.

In an embodiment, the second indication information is in an R field of an IUC request MAC CE, and the third indication information is in a newly-added field outside the IUC request MAC CE.

In an embodiment, the first information is second-stage SCI containing an IUC request and/or an MAC CE containing an IUC request, and the first information is used for triggering the first terminal to provide COT when the first terminal is a RedCap terminal.

In an embodiment, the RedCap terminal satisfies at least one of the following conditions: supporting a receive antenna; a maximum transmission bandwidth is less than a specific bandwidth; a maximum modulation order is less than or equal to a specific order; or belonging to a type of devices defined in a standard.

In an embodiment, the receiving unit 2001 is further configured to receive NACK information from the first terminal.

In an embodiment, COT sharing information from the first terminal is in the NACK information or is transmitted with the NACK information.

In an embodiment, a value of a CAPC used by the second terminal to generate COT is greater than or equal to a second value. The second value is determined based on at least one of: a value of a CAPC of data corresponding to the NACK information, network configuration, pre-configuration, or definition in a standard.

In an embodiment, the value of the CAPC of the data corresponding to the NACK information is indicated via second-stage SCI.

In an embodiment, COT sharing information from the first terminal is prior to a reserved resource of the second terminal.

In an embodiment, the reserved resource of the second terminal includes a time-domain position of a resource reserved by the second terminal for transmitting data to the first terminal.

In an embodiment, a value of a CAPC of data to-be-transmitted by the second terminal is greater than or equal to a third value. The third value is determined based on at least one of: network configuration, pre-configuration, or definition in a standard.

In an embodiment, the value of the CAPC of the data to-be-transmitted is determined based on higher-layer signaling from the second terminal.

In an embodiment, the second terminal is a RedCap terminal and an ID of the second terminal is known.

In an embodiment, a time interval between two consecutive COTs shared by the first terminal is less than or equal to a specified time interval.

In an embodiment, the specified time interval is determined based on at least one of: higher-layer signaling from the second terminal, network configuration, pre-configuration, or definition in a standard.

In an embodiment, in a duration indicated by COT sharing information from the first terminal, one or more reserved resources of the second terminal are included.

In an embodiment, COT sharing information from the first terminal is transmitted via second-stage SCI and/or an MAC CE.

In an embodiment, COT sharing information from the first terminal is transmitted with SL data and/or an MAC CE.

In an embodiment, an MAC CE for carrying the COT sharing information contains at least one of: a CAPC, indicating a value of a CAPC of a shared COT; a transmission type for the shared COT, including unicast, broadcast, or multicast for feeding back ACK or NACK; a COT sharing ID, indicating an ID of the first terminal and/or an ID of the second terminal; or a remaining COT duration.

The second terminals 1900 and 2000 in embodiments of the disclosure can implement corresponding functions of the second terminal in the foregoing method embodiments. For the procedure, function, implementation, and advantage corresponding to each module (sub-module, unit, or assembly, etc.) in the second terminals 1900 and 2000, reference can be made to the corresponding illustrations in the foregoing method embodiments, which will not be repeated herein. It may be noted that, the functions of various modules (sub-modules, units, or assemblies, etc.) in the second terminals 1900 and 2000 described in embodiments of the disclosure may be implemented by different modules (sub-modules, units, or assemblies, etc.), or may be implemented by the same module (sub-module, unit, or assembly, etc.).

FIG. 21 is a schematic structural diagram of a communication device 2100 according to embodiments of the disclosure. The communication device 2100 includes a processor 2110. The processor 2110 may invoke and execute a computer program stored in a memory, to cause the communication device 2100 to implement the method in embodiments of the disclosure.

In an embodiment, the communication device 2100 may further include a memory 2120. The processor 2110 may invoke and execute a computer program stored in the memory 2120, to cause the communication device 2100 to implement the method in embodiments of the disclosure.

The memory 2120 may be a separate device independent of the processor 2110, or may be integrated into the processor 2110.

In an embodiment, the communication device 2100 may further include a transceiver 2130. The processor 2110 may control the transceiver 2130 to communicate with another device, and specifically, may transmit information or data to another device, or receive information or data from the another device.

The transceiver 2130 may include a transmitter and a receiver. The transceiver 2130 may further include an antenna, where one or more antennas may be provided.

In an embodiment, the communication device 2100 may be the first terminal in embodiments of the disclosure, and the communication device 2100 may implement corresponding procedures implemented by the first terminal in the methods according to embodiments of the disclosure, which will not be repeated herein for the sake of simplicity.

In an embodiment, the communication device 2100 may be the second terminal in embodiments of the disclosure, and the communication device 2100 may implement corresponding procedures implemented by the second terminal in the methods according to embodiments of the disclosure, which will not be repeated herein for the sake of simplicity.

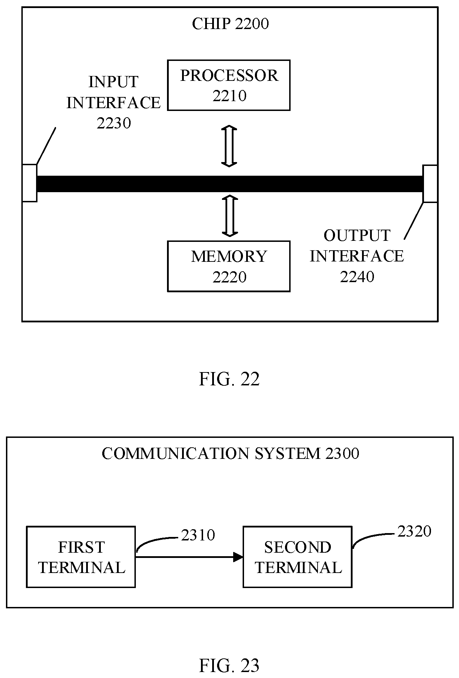

FIG. 22 is a schematic structural diagram of a chip 2200 according to embodiments of the disclosure. The chip 2200 includes a processor 2210. The processor 2210 may invoke and execute a computer program stored in a memory to implement the method in embodiments of the disclosure.

In an embodiment, the chip 2200 may further include a memory 2220. The processor 2210 may invoke and execute a computer program stored in the memory 2220, to implement the method performed by the first terminal or the second terminal in embodiments of the disclosure.

The memory 2220 may be a separate device independent of the processor 2210, or may be integrated into the processor 2210.

In an embodiment, the chip 2200 may further include an input interface 2230. The processor 2210 may control the input interface 2230 to communicate with another device or chip, and specifically, may obtain information or data transmitted by the another device or chip.

In an embodiment, the chip 2200 may further include an output interface 2240. The processor 2210 may control the output interface 2240 to communicate with another device or chip, and specifically, may output information or data to the another device or chip.

In an embodiment, the chip may be applied to the first terminal in embodiments of the disclosure, and the chip may implement corresponding procedures implemented by the first terminal in the methods according to embodiments of the disclosure, which will not be repeated herein for the sake of simplicity.

In an embodiment, the chip may be applied to the second terminal in embodiments of the disclosure, and the chip may implement corresponding procedures implemented by the second terminal in the methods according to embodiments of the disclosure, which will not be repeated herein for the sake of simplicity.

The chip applied to the first terminal may be the same as or different from the chip applied to the second terminal.

It may be understood that, the chip mentioned in embodiments of the disclosure may also be a system-on-chip (SoC).

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

FIG. 23 is a schematic block diagram of a communication system 2300 according to embodiments of the disclosure. The communication system 2300 includes a first terminal 2310 and a second terminal 2320.

The first terminal 2310 is configured to share COT with a second terminal when a first condition is satisfied.

The second terminal 2320 is configured to transmit first information to a first terminal, where the first information is used for requesting the first terminal to provide COT.

The first terminal 2310 can be configured to implement corresponding functions implemented by the first terminal in the foregoing methods, and the second terminal 2320 can be configured to implement corresponding functions implemented by the second terminal in the foregoing methods, which will not be repeated herein for the sake of simplicity.

All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and simplicity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for sidelink (SL) communication, comprising:
sharing, by a first terminal, channel occupancy time (COT) with a second terminal when a first condition is satisfied.

2. The method of claim 1, further comprising:
receiving, by the first terminal, first information from the second terminal, wherein the first information is used for requesting the first terminal to provide COT.

3. The method of claim 2, wherein the first condition comprises that the first terminal receives the first information.

4. The method of claim 2 or 3, wherein the first information comprises a channel access priority class (CAPC) and/or latest time for providing COT.

5. The method of claim 4, wherein a length of time between receiving the first information by the first terminal and transmitting COT sharing information by the first terminal is less than the latest time for providing COT.

6. The method of any one of claims 2 to 5, wherein a value of a CAPC used by the first terminal to generate COT is greater than or equal to a first value, wherein the first value is determined based on at least one of: a value of a CAPC in the first information, network configuration, pre-configuration, or definition in a standard.

7. The method of any one of claims 2 to 6, wherein the first information is transmitted via first-stage SL control information (SCI).

8. The method of claim 7, wherein the first-stage SCI contains an indication field, wherein the indication field indicates at least one of:
whether the second terminal needs the first terminal to share COT; or
a CAPC of COT expected by the second terminal.

9. The method of claim 7 or 8, wherein the first-stage SCI containing the first information is transmitted with SL data.

10. The method of any one of claims 2 to 6, wherein the first information is transmitted via second-stage SCI and/or a medium access control (MAC) control element (CE).

11. The method of claim 10, wherein for the second-stage SCI for transmitting the first information, a newly-defined second-stage SCI format is used, or an existing second-stage SCI format is re-used.

12. The method of claim 10 or 11, wherein a format of the second-stage SCI comprises a first part and a second part, wherein the first part comprises bit fields other than a unicast/multicast/broadcast indication field in SCI format 2-A, and the second part comprises at least one of: a COT request; or a CAPC.

13. The method of claim 12, wherein the format of the second-stage SCI is SCI format 2-C.

14. The method of claim 10 or 11, wherein the MAC CE contains first indication information, wherein the first indication information indicates a COT request and a CAPC.

15. The method of claim 14, wherein the first indication information is in a newly-added field outside an inter-user equipment (UE) coordination (IUC) request MAC CE.

16. The method of claim 10 or 14, wherein the MAC CE contains second indication information and third indication information, wherein the second indication information indicates a COT request, and the third indication information indicates a CAPC.

17. The method of claim 16, wherein the second indication information is in an R field of an IUC request MAC CE, and the third indication information is in a newly-added field outside the IUC request MAC CE.

18. The method of any one of claims 2 to 17, wherein the first information is second-stage SCI containing an IUC request and/or an MAC CE containing an IUC request, and the first information is used for triggering the first terminal to provide COT when the first terminal is a reduced-capability (RedCap) terminal.

19. The method of claim 18, wherein the RedCap terminal satisfies at least one of the following conditions:
supporting a receive antenna;
a maximum transmission bandwidth is less than a specific bandwidth;
a maximum modulation order is less than or equal to a specific order; or
belonging to a type of devices defined in a standard.

20. The method of claim 1, wherein the first condition comprises that: the first terminal feeds back negative acknowledgement (NACK) information to the second terminal.

21. The method of claim 20, wherein COT sharing information transmitted by the first terminal to the second terminal is in the NACK information or is transmitted with the NACK information.

22. The method of claim 20 or 21, wherein a value of a CAPC used by the second terminal to generate COT is greater than or equal to a second value, wherein the second value is determined based on at least one of: a value of a CAPC of data corresponding to the NACK information, network configuration, pre-configuration, or definition in a standard.

23. The method of claim 22, wherein the value of the CAPC of the data corresponding to the NACK information is indicated via second-stage SCI.

24. The method of claim 1, wherein the first condition comprises: prior to a reserved resource of the second terminal.

25. The method of claim 24, further comprising:
obtaining, by the first terminal, a time-domain position of a resource reserved by the second terminal for transmitting data to the first terminal.

26. The method of claim 1, wherein the first condition comprises that: a value of a CAPC of data to-be-transmitted by the second terminal is greater than or equal to a third value, wherein the third value is determined based on at least one of: network configuration, pre-configuration, or definition in a standard.

27. The method of claim 26, wherein the value of the CAPC of the data to-be-transmitted is determined based on higher-layer signaling from the second terminal.

28. The method of claim 1, wherein the first condition comprises that: the second terminal is a RedCap terminal and an identity (ID) of the second terminal is known.

29. The method of claim 28, wherein a time interval between two consecutive COTs shared by the first terminal with the second terminal is less than or equal to a specified time interval.

30. The method of claim 29, wherein the specified time interval is determined based on at least one of: higher-layer signaling from the second terminal, network configuration, pre-configuration, or definition in a standard.

31. The method of any one of claims 1 to 30, wherein in a duration indicated by COT sharing information transmitted by the first terminal to the second terminal, one or more reserved resources of the second terminal are comprised.

32. The method of any one of claims 1 to 31, wherein COT sharing information transmitted by the first terminal to the second terminal is transmitted via second-stage SCI and/or an MAC CE.

33. The method of any one of claims 1 to 32, wherein COT sharing information transmitted by the first terminal to the second terminal is transmitted with SL data and/or an MAC CE.

34. The method of claim 32 or 33, wherein an MAC CE for carrying the COT sharing information contains at least one of:
a CAPC, indicating a value of a CAPC of shared COT;
a transmission type for the shared COT, comprising unicast, broadcast, or multicast for feeding back acknowledgement (ACK) or NACK;
a COT sharing ID, indicating an ID of the first terminal and/or an ID of the second terminal; or
a remaining COT duration.

35. A method for sidelink (SL) communication, comprising:
transmitting, by a second terminal, first information to a first terminal, wherein the first information is used for requesting the first terminal to provide channel occupancy time (COT).

36. The method of claim 35, wherein a second condition for transmitting the first information by the second terminal comprises at least one of:
data that needs to be transmitted to the first terminal exists in a logical channel of the second terminal;
the second terminal is capable of determining a channel access priority class (CAPC) of the data that needs to be transmitted to the first terminal;
the second terminal is capable of determining the CAPC of the data that needs to be transmitted to the first terminal, and the CAPC is greater than or equal to a specified value;
the second terminal is to transmit SL data to the first terminal, and an SL grant for carrying the SL data is capable of carrying the first information; or
the second terminal determines, according to an implementation of the second terminal, whether to transmit the first information to the first terminal.

37. The method of claim 35 or 36, further comprising:
receiving, by the second terminal, COT shared by the first terminal.

38. The method of any one of claims 35 to 37, wherein the first information comprises a CAPC and/or latest time for providing COT.

39. The method of claim 38, wherein a length of time between receiving the first information by the first terminal and transmitting COT sharing information by the first terminal is less than the latest time for providing COT.

40. The method of any one of claims 35 to 39, wherein a value of a CAPC used by the first terminal to generate COT is greater than or equal to a first value, wherein the first value is determined based on at least one of: a value of a CAPC in the first information, network configuration, pre-configuration, or definition in a standard.

41. The method of any one of claims 35 to 40, wherein the first information is transmitted via first-stage SL control information (SCI).

42. The method of claim 41, wherein the first-stage SCI contains an indication field, wherein the indication field indicates at least one of:
whether the second terminal needs the first terminal to share COT; or
a CAPC of COT expected by the second terminal.

43. The method of claim 41 or 42, wherein the first-stage SCI containing the first information is transmitted with SL data.

44. The method of any one of claims 35 to 40, wherein the first information is transmitted via second-stage SCI and/or a medium access control (MAC) control element (CE).

45. The method of claim 44, wherein for the second-stage SCI for transmitting the first information, a newly-defined second-stage SCI format is used, or an existing second-stage SCI format is re-used.

46. The method of claim 44 or 45, wherein a format of the second-stage SCI comprises a first part and a second part, wherein the first part comprises bit fields other than a unicast/multicast/broadcast indication field in SCI format 2-A, and the second part comprises at least one of: a COT request; or a CAPC.

47. The method of claim 46, wherein the format of the second-stage SCI is SCI format 2-C.

48. The method of claim 44 or 47, wherein the MAC CE contains first indication information, wherein the first indication information indicates a COT request and a CAPC.

49. The method of claim 48, wherein the first indication information is in a newly-added field outside an inter-user equipment (UE) coordination (IUC) request MAC CE.

50. The method of claim 44 or 49, wherein the MAC CE contains second indication information and third indication information, wherein the second indication information indicates a COT request, and the third indication information indicates a CAPC.

51. The method of claim 50, wherein the second indication information is in an R field of an IUC request MAC CE, and the third indication information is in a newly-added field outside the IUC request MAC CE.

52. The method of any one of claims 35 to 51, wherein the first information is second-stage SCI containing an IUC request and/or an MAC CE containing an IUC request, and the first information is used for triggering the first terminal to provide COT when the first terminal is a reduced-capability (RedCap) terminal.

53. The method of claim 52, wherein the RedCap terminal satisfies at least one of the following conditions:
supporting a receive antenna;
a maximum transmission bandwidth is less than a specific bandwidth;
a maximum modulation order is less than or equal to a specific order; or
belonging to a type of devices defined in a standard.

54. The method of claim 35, further comprising:
receiving, by the second terminal, negative acknowledgement (NACK) information from the first terminal.

55. The method of claim 54, wherein COT sharing information from the first terminal is in the NACK information or is transmitted with the NACK information.

56. The method of claim 54 or 55, wherein a value of a CAPC used by the second terminal to generate COT is greater than or equal to a second value, wherein the second value is determined based on at least one of: a value of a CAPC of data corresponding to the NACK information, network configuration, pre-configuration, or definition in a standard.

57. The method of claim 56, wherein the value of the CAPC of the data corresponding to the NACK information is indicated via second-stage SCI.

58. The method of claim 35, wherein COT sharing information from the first terminal is prior to a reserved resource of the second terminal.

59. The method of claim 58, wherein the reserved resource of the second terminal comprises a time-domain position of a resource reserved by the second terminal for transmitting data to the first terminal.

60. The method of claim 35, wherein a value of a CAPC of data to-be-transmitted by the second terminal is greater than or equal to a third value, wherein the third value is determined based on at least one of: network configuration, pre-configuration, or definition in a standard.

61. The method of claim 60, wherein the value of the CAPC of the data to-be-transmitted is determined based on higher-layer signaling from the second terminal.

62. The method of claim 61, wherein the second terminal is a RedCap terminal and an identity (ID) of the second terminal is known.

63. The method of claim 62, wherein a time interval between two consecutive COTs shared by the first terminal is less than or equal to a specified time interval.

64. The method of claim 63, wherein the specified time interval is determined based on at least one of: higher-layer signaling from the second terminal, network configuration, pre-configuration, or definition in a standard.

65. The method of claim 35, wherein in a duration indicated by COT sharing information from the first terminal, one or more reserved resources of the second terminal are comprised.

66. The method of any one of claims 35 to 65, wherein COT sharing information from the first terminal is transmitted via second-stage SCI and/or an MAC CE.

67. The method of any one of claims 35 to 66, wherein COT sharing information from the first terminal is transmitted with SL data and/or an MAC CE.

68. The method of claim 66 or 67, wherein an MAC CE for carrying the COT sharing information contains at least one of:
a CAPC, indicating a value of a CAPC of shared COT;
a transmission type for the shared COT, comprising unicast, broadcast, or multicast for feeding back acknowledgement (ACK) or NACK;
a COT sharing ID, indicating an ID of the first terminal and/or an ID of the second terminal; or
a remaining COT duration.

69. A first terminal, comprising:
a processing unit configured to share channel occupancy time (COT) with a second terminal when a first condition is satisfied.

70. A second terminal, comprising:
a transmitting unit configured to transmit first information to a first terminal, wherein the first information is used for requesting the first terminal to provide channel occupancy time (COT).

71. A terminal device, comprising:
a transceiver, a processor, and a memory, wherein the memory is configured to store a computer program, the transceiver is configured to communicate with other devices, and the processor is configured to invoke and execute the computer program stored in the memory, to cause the terminal device to perform the method of any one of claims 1 to 34 or the method of any one of claims 35 to 68.

72. A chip, comprising:
a processor configured to invoke and execute a computer program stored in a memory, to cause a device equipped with the chip to perform the method of any one of claims 1 to 34 or the method of any one of claims 35 to 68.

73. A computer-readable storage medium configured to store a computer program which, when executed by a device, causes the device to perform the method of any one of claims 1 to 34 or the method of any one of claims 35 to 68.

74. A computer program product, comprising computer program instructions which cause a computer to perform the method of any one of claims 1 to 34 or the method of any one of claims 35 to 68.

75. A computer program which causes a computer to perform the method of any one of claims 1 to 34 or the method of any one of claims 35 to 68.

76. A communication system, comprising:
a first terminal configured to perform the method of any one of claims 1 to 34; and
a second terminal configured to perform the method of any one of claims 35 to 68.
